(19) Europäisches Patentamt
European Patent Office
Office européen des brevets

(11) EP 0 397 699 B1

## (12) EUROPEAN PATENT SPECIFICATION

(45) Date of publication and mention
of the grant of the patent:
**03.04.1996 Bulletin 1996/14**

(21) Application number: 89900982.3

(22) Date of filing: 21.11.1988

(51) Int Cl.$^6$: **G01N 35/00, G01N 27/447**

(86) International application number:
**PCT/US88/04220**

(87) International publication number:
**WO 89/04966 (01.06.1989 Gazette 1989/12)**

(54) **AUTOMATED CAPILLARY ELECTROPHORESIS APPARATUS**

SELBSTTÄTIGE KAPILLARE ELEKTROPHORESE-VORRICHTUNG

APPAREIL D'ELECTROPHORESE CAPILLAIRE AUTOMATIQUE

(84) Designated Contracting States:
**AT BE CH DE FR GB IT LI LU NL SE**

(30) Priority: **25.11.1987 US 125544**
**14.11.1988 US 270788**

(43) Date of publication of application:
**22.11.1990 Bulletin 1990/47**

(60) Divisional application: **95112032.8**

(73) Proprietor: **GUZMAN, Norberto A.**
**East Brunswick, NJ 08816 (US)**

(72) Inventor: **GUZMAN, Norberto A.**
**East Brunswick, NJ 08816 (US)**

(74) Representative: **Knoblauch, Ulrich, Dr.-Ing.,**
**Patentanwälte Dr. Knoblauch et al**
**Kühhornshofweg 10**
**D-60320 Frankfurt (DE)**

(56) References cited:
**EP-A- 357 255          US-A- 3 793 180**
**US-A- 3 869 365          US-A- 3 918 913**
**US-A- 3 941 678          US-A- 3 948 753**
**US-A- 4 375 401**

- **Jorgenson,J. "Capillary Zone Electrophoresis"
New Directions in Electrophoretic
Methods.Jorgenson,J. ed. ACS symposium
Series 335,American Chemical
Society,Washington, DC. (1987) pp. 182-197.**

## Description

## BACKGROUND OF THE INVENTION

Electrophoresis is a phenomenom in which charged particles move in a conductive buffer medium or fluid across which a potential difference is applied. The migration is toward an electrode carrying charge opposite to that of the particles.

Electrophoresis is one of the most important methods available for the investigation of biological materials, and probably the most efficient procedure for the separation and detection of proteins and other matter.

Electrophoresis separation relies on the differential speeds of the migration of differently charged particles in an electrical field. The migration speed is primary a function of the charge on the particle and the field strength applied and the charge on a particle is determined by the pH of the buffer medium. The most important application of this technique in biomedical research and clinical chemistry laboratories, is in the electrophoretic separation of proteins, nucleic acids, their components peptides and oligonucleotides, as well as complex macromolecules such as lipoproteins.

Several different systems are known for practicing electrophoretic separation and one system, known as zonal procedures, has advantages but it also has certain limitations. Some of the most common limitations are: The amount of sample required in order to reveal the components by the common staining procedures is usually large, the preparation of the apparatus and complete system involved in the electrophoretic separation is commonly tedious and time consuming, the time required to obtain complete separation of the components is often hours, the time required to reveal the components and to obtain some quantitation of the separated substances is also commonly hours, the yield of recovery of the components as biological actives in most cases is very low, the reproducibility of the electrophoretic separation is not 100 percent accurate, and the automation to perform the entire system operation is almost lacking.

Capillary electrophoresis has been shown to be a technique for obtaining high separation efficiency. For some proteins and small peptides, separation efficiencies of approximately one million to about a few million have been demonstrated. In general, this technique utilizes a fused silica (quartz) capillary with an inside diameter ranging from about 25 microns to about 200 microns, and a length ranging from about 10 centimeters to about 100 centimeters. Since the entire volume of the column is only 0.5 to about 30 microliters (yielding probably the smallest total surface area of column chromatography), the injection volume is usually in the low nanoliters range. As a consequence, the sensitivity of this technique is quite high and it is possible to obtain quantitation in the order of picomoles (and probably femtomoles or attomoles) using fluorescence, electrochemical, laser induced fluorescence, and mass spectrometry detectors, and to obtain quantitation in the order of nanomoles using ultraviolet detectors.

In capillary electrophoresis, the efficient heat transfer from small diameter capillaries permits application of unusually high voltages ranging from about 5,000 volts to about 30,000 volts while maintaining a low current, in the range of about 10 microamperes to about 90 microamperes. The application of high voltages promotes more effective separations and increases the speed of analysis to record times of about 5 to 40 minutes.

In addition to high separation efficiency (theoretical plates), fairly high resolution, high sensitivity quantitation, and small migration (retention) times, capillary electrophoresis presents a few more advantages over conventional electrophoresis, in general, other chromatographic procedures. Some of these advantages are: a) application to a wide variety of samples ranging from small ions to proteins or other macromolecules of molecular weights of approximately 290,000 daltons or higher (such as DNA fragments, viruses, and subcellular particles) by using essentially the same column and probably the same conditions of electrophoretic separation; b) capillaries should provide an ideal system to explore nonaqueous media, particularly with substances which are highly hydrophobic; c) capillaries are reusable many times making the electrophoretic separation system very practical and economical; d) on-line electronic detection permits good quantitation and further enhances possibilities for fully automatic operation making the capillary electrophoresis system of higher resolution, greater speed, and better accuracy than conventional methods.

In the prior art, it is generally known that a material, containing mixtures of substances to be analyzed, can be passed along a capillary tube and through a detector under the influence of an applied voltage. The applied voltage charges the substances and the charges on the substances determine their spacing and their speed of passage along the capillary tube.

The prior art, U.S. Patents 3,620,958, 3,948,753 and 4,459,198, show electrophoresis apparatus including a capillary tube connected between two containers for containing the substance to be analyzed and having electrical potential applied between the two containers and across the capillary tube. While the various forms of apparatus shown in these patents are apparently useful, they require large concentrations of samples to be analyzed and none is capable of being automated or provides teaching related to automation.

Jorgenson, J. "Capillary Zone Electrophoresis" New Directions in Electrophoretic Methods Jorgenson, J. ed. ACS symposium Series 335, American Chemical Society, Washington, DC. (1987) pp. 187-197 discloses a capillary electrophoresis apparatus comprising a capillary tube of the type which can be electrically charged, said capillary tube having first and second ends, a detector adjacent to said capillary tube, first means at said first end of said capillary tube

EP 0 397 699 B1

providing a source of buffer solution and a source of a sample substance to be analyzed, and second means coupled to said apparatus for applying electrical potential across said capillary tube whereby a sample flows through said capillary tube and past said detector.

One end of a capillary is placed in a buffer reservoir within a plexiglass housing in which also a high voltage electrode is disposed. The other end of the capillary is dipped into a buffer reservoir in which the electrode is connected through an ammeter to ground.

In order to make an analysis, the buffer reservoir at the high voltage end of the capillary is replaced with a reservoir containing sample using then an electromigration technique.

US-A-4 375 401 discloses another electrophoresis system for simple, rapid and reproducible separations of biological materials. In this system a plurality of columns is disposed on a rotatable carousel. During one revolution of the carousel, the columns take step by step different positions in which they are loaded with a density gradient maker and a sample, respectively. In further positions or stations a high voltage is applied to the columns in order to separate the different fractions within each liquid column in said columns. Finally, the liquid flows out of the columns into a tube and through a detector.

US-A-3 941 678 discloses an apparatus for electrophoretic analysis comprising an electrophoretic capillary tube having each end inserted in a buffer tank containing terminal and leading electrolyte, respectively. The capillary tube is provided with a sample introducing device through which a leading elektrolyte are introduced into the capillary tube to form a liquid column therein in the well known manner.

The present invention provides high voltage capillary electrophoresis apparatus including, among other things, means for feeding small concentrations of sample material into a capillary tube, automatically applying the proper voltage to cause the components of the sample to be charged and to flow along the capillary tube through a detector wherein the components are detected and a printed record is made. The apparatus can then automatically repeat the process for the analysis of multiple samples.

The basic apparatus of the invention is susceptible of many modifications in its various parts including the capillary tube portion. In addition, the method of detection of samples may be varied and the collection of samples can be modified. The invention can also be adapted to measure electroosmotic flow in a capillary.

## DESCRIPTION OF THE DRAWINGS

Fig. 1 is a perspective view of the rear of apparatus embodying the invention;

Fig. 2 is a sectional view along the lines 2-2 in Fig. 1;

Fig. 3 is a perspective view of a portion of the apparatus shown in Fig. 1;

Fig. 4 is a perspective view of a portion of the apparatus of Fig. 1;

Fig. 5 is a sectional, elevational view of a portion of the apparatus of Fig. 1;

Fig. 6 is an enlarged perspective view of a portion of the apparatus of Fig. 1;

Fig. 7 is a front view of a portion of the apparatus of Fig. 1;

Fig. 8 is a side elevational view of a modification of a portion of the apparatus of Fig. 1 with portions thereof in section;

Fig. 9 is a front elevational view of a modification of a portion of the apparatus shown in Fig. 1;

Fig. 10 is a schematic representation of the electronic control system used in the invention;

Fig. 11 is a sectional view of a modification of the capillary portion of the apparatus of Fig. 1;

Fig. 12 is a plan view of a portion of a detector used in Fig. 1 with the apparatus of Fig. 11;

Fig. 13 is a schematic representation of a mode of operating multiple pieces of apparatus of the type shown in Fig. 1;

Figs. 14A and 14B together are a bottom view of a modification of the base support of the invention;

Fig. 15 is perspective front view of a modification of the invention;

3

Fig. 16 is a perspective view of a modified capillary cartridge usable with the apparatus of the invention;

Fig. 17 is a perspective of apparatus embodying modifications of the invention;

Fig. 18 is a perspective enlarged view of a switch used with the apparatus of Fig. 17;

Fig. 19 is a front elevational view of a portion of apparatus of the invention illustrating a modification thereof;

Fig. 20 is a front elevational view of a modification of the apparatus shown in Fig. 19;

Fig. 21 is a front elevational view of a portion of a capillary tube and magnifying glass used to analyze electroosmotic flow;

Fig. 22 is a perspective view of a modification of apparatus embodying the invention;

Fig. 23 is a modification of the capillary tube used with the invention;

Fig. 24 is a front elevational view illustrating additional apparatus which can be used in the apparatus of the invention;

Fig. 25 is a perspective view of a modification of the invention used with some of the apparatus of Fig. 24;

Fig. 26 is a perspective view of a modification of the apparatus of Fig. 25;

Fig. 27 is a front elevational view of a portion of the apparatus of the invention illustrating a mode of operation thereof;

Fig. 28 shows pulses detected by the method of Fig. 27;

Fig. 29 shows a curve derived from the pulses of Fig. 28; and

Fig. 30 is a side elevational view of a modified capillary including means for cleaning the capillary.

## DESCRIPTION OF THE INVENTION

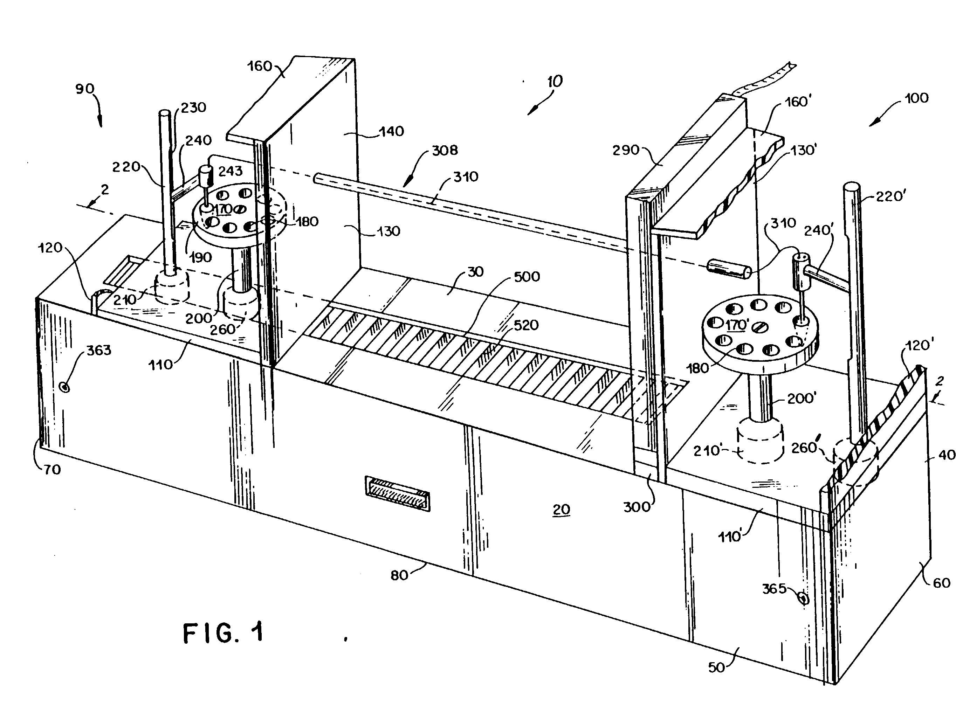

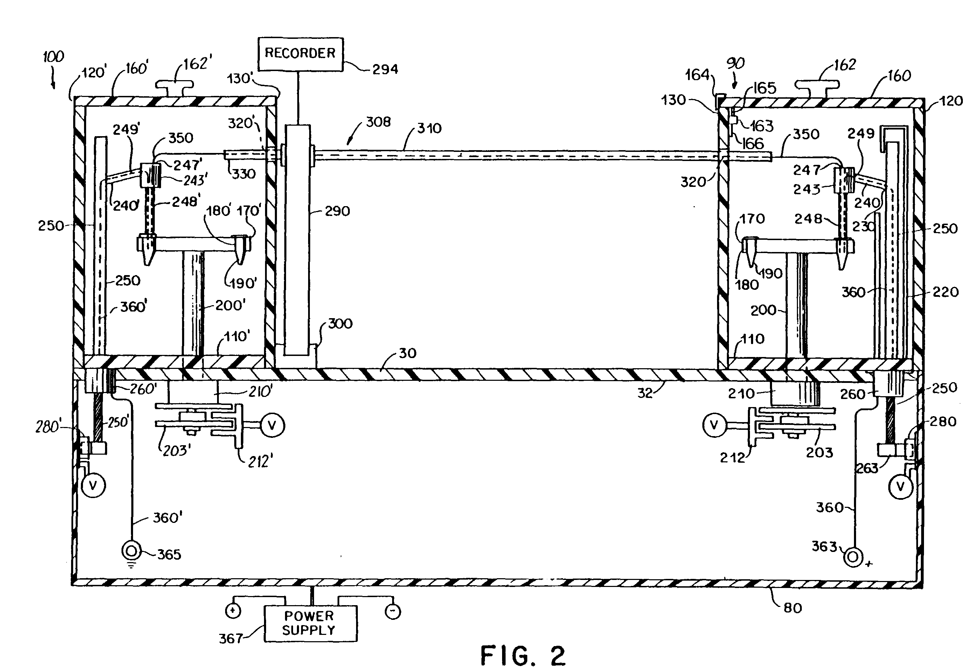

The automated electrophoresis apparatus of the invention 10, shown from the rear in Fig. 1, includes a base support member to which various pieces of operating equipment are secured. The support member 20 is box-like and includes a top wall 30, a front wall 40, a rear wall 50 and end walls 60 and 70 all of which extend downwardly from the top wall. A bottom cover plate 80 (Figs. 1 and 2) is secured to the support member 20 and provides a flat support surface for the apparatus 10.

The support member 20, is of metal or a plastic and carries on top wall 30 a left hand box 90 and a right hand box 100 as seen in Fig. 1. The left hand box 90 includes an insulating base plate 110, of a metal or plastic, secured to top wall 30 and a transparent enclosure, of plexiglass or the like, including (Figs. 1 and 2) left and right side walls 120 and 130, front and rear walls 140 and 150 and a top wall 160. The top wall 160 is a cover for the box 90 and is adapted to be lifted off the box by means of knob 162 to provide access to the interior thereof. The enclosure for box 90 is suitable secured to the base 110.

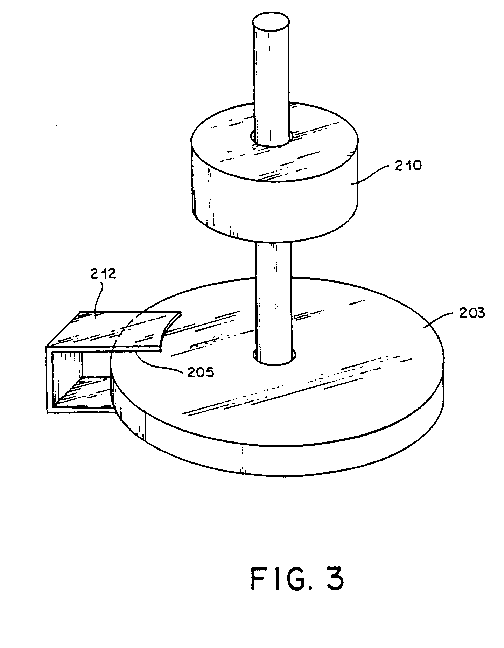

Box 90 is provided with a rotatable horizontal table 170 having a circular array of holes or apertures 180 in which fluid sample cups 190 are seated. The table is detachably secured to the upper end of a vertical post 200 so that tables with different numbers of holes or different sizes of holes or with other features can be secured to the post. The post 200 extends through and beneath the top wall 30 of the support member 20 (Figs. 2 and 3) where it is suitable connected to a small motor 210 which is used to rotate the post 200 and table 170. The motor 210 is secured to the lower surface 32 of the top wall 30 and is of a type which permits the post 200 or an extension thereof to extend through it to be driven thereby.

The lower end of the post 200 carries a horizontal disk 203 (Fig 3) which rotates with the post and includes a slot 205 which is adapted to operate with an optical sensor 212 positioned adjacent thereto.

Adjacent to the rotatable table 170, referring to Figs. 1, 2 and 6, is a hollow, tubular vertical post 220 having an aperture or slot 230 in its side wall. A horizontal arm 240 has one end inside post 220 and secured to a vertical rod 250 which is suitable mounted so that it can be driven vertically up and down. The lower end of the vertical rod 250 or an extension thereof passes through a small motor 260 secured to the lower surface 32 of the top wall 30. The lower end of the rod 250 carries a laterally projecting arm 263 which is positioned to operate with an optical sensor 280 positioned adjacent thereto.

Referring again to the horizontal arm 240, (Figs. 1, 2, and 6) the outer end thereof terminates in a small solid cylinder 243 which is oriented vertically and is provided with two through-holes 247 and 249 which communicate with a hollow tube 248 which extends downwardly from the solid cylinder in alignment with the holes 180 in table 170 and the sample cups therein. The hollow tube 248 is of a small diameter and is dimensioned so that it can enter a sample cup 190 and extend to about the bottom thereof to enter fluid therein.

The box 100 contains the same apparatus as box 90 as described above. The corresponding parts in box 100 carry the same reference numerals as the parts in the box 90 but primed.

The boxes 90 and 100 include means for applying electrical potential across the apparatus 10. This means includes a first wire electrode 360 having one end secured to a power input terminal 363. (Figs. 1 and 2) in the rear upwardly in the hollow tube 220 adjacent to the vertical rod 250 and out of the opening 230 in the side wall and through the hole 249 in cylinder 243 down through the tube 248 to the end thereof so that it can rest in a fluid in a sample cup when the apparatus 10 is in operation.

The electrical means also includes a similar wire electrode 360' secured to a power input terminal 365 in the rear wall 50 of the apparatus 10. This electrode follows a similar path through tube 250' and cylinder 243' into the tube 248' associated therewith for ultimate insertion into a sample cup. The electrodes 360 and 360' are preferably of platinum or the like and are adapted to carry the voltages used in operation of the invention. A power supply 367 is provided for connection to terminals 363 and 365 to electrodes 360 and 360' for providing the required voltages. Power supply 367 may also provide whatever other power is needed by the apparatus 10 such as for the motors 210, 210' and 260, 260'. Other auxiliary power supplies may be provided as desired.

In one embodiment of the invention, illustrated in Fig. 2, the power supply 367 may be of such small size that it can be mounted within support member 20 at any suitable location so that the apparatus 10 has its own self-contained power supply which may be manually or computer-controlled.

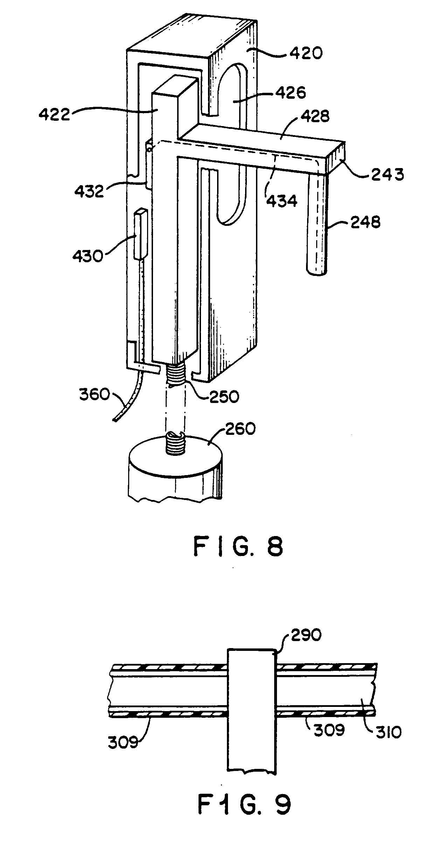

When a built-in power supply is provided, referring to Fig. 7, a voltmeter 376 and an ammeter 378 are secured to the front wall 40 of support member 20 along with a rheostat for adjusting the operating voltage shown on the voltmeter.

A preferred structure for the vertical posts 250, 250', to insure electrical safety when high voltage is applied to electrode 360, is shown in Figure 8. This embodiment for ease of construction includes an outer post 420 and slidable inner post 422 which are both generally square or rectangular in construction. The outer post includes a slot 426 in its side wall and a horizontal arm 428 extends therethrough from the inner post 422. Arm 428 terminates in cylinder 243. The cable 360 comes up from the terminal 363 and runs inside the outer post 420 and terminates in a rigid, relatively large-area flat metallic electrode 430 positioned perhaps half-way up the post to slightly below the slot 426 therein.

Similarly, the slidable inner post 422 carries on its outer surface a relatively large area electrode 432 which is suitably positioned so that when the inner post lowered to operating position, the two electrodes 430 and 432 are in contact with each other. A thin platinum 434 runs from the electrode 432 through horizontal arm 428 and into the cylinder 243 and hollow tube 248 as described above.

Referring to Figs. 1 and 2 an optical detector 290 for use in detecting material passing through a capillary tube which extends through the detector is seated on a support frame 300 secured to the top wall 30 of the support member 20 adjacent to the box 100. The apparatus 10 is designed to use a detector known as an on-column detector of the type which uses ultraviolet or fluorescent light in the detection process. Such detectors are made by ISCO of Lincoln, Nebraska and EM SCIENCE of Cherry Hill, New Jersey.

For use with the apparatus of the invention 10, modifications of the commercial detectors were made in the cuvette thereof. Other modifications might also be made.

The detector 290 is coupled to other apparatus 294 for providing a record of the detection operation and one such apparatus is the ISCO UA-5/V4 absorbance/fluorescence variable-wavelength detector or the EM SCIENCE L-4200/L-4000 UV/visible variable-wavelength detector which include a strip chart recorder and/or an integrator.

A rigid holder 308 is provided for supporting a capillary tube for the apparatus 10 between box 90 and box 100 (Figs. 1 and 2). This holder comprises a first hollow rigid tube 310 threadedly secured to one end of the cuvette of the optical unit of the detector 290 and supported along its length in a hole 320 in the side wall 130 of the box 90 and extending into the box 90. A second hollow rigid tube 330 is threadedly secured to the other end of the cuvette of detector 290 and is supported along its length in a hole 320' in the side wall 130' of the box 100 and extending into the box 100. The tubes 310 and 330 are aligned with each other and with the optical sensing element located within the detector 290.

Preferably, the capillary tube holder 308 is provided with surrounding rigid tube 309 (Fig. 9) through which a cooling or heating fluid of any suitable type can be circulated in any suitable manner, to control the temperature of the capillary tube holder and the capillary tube therein.

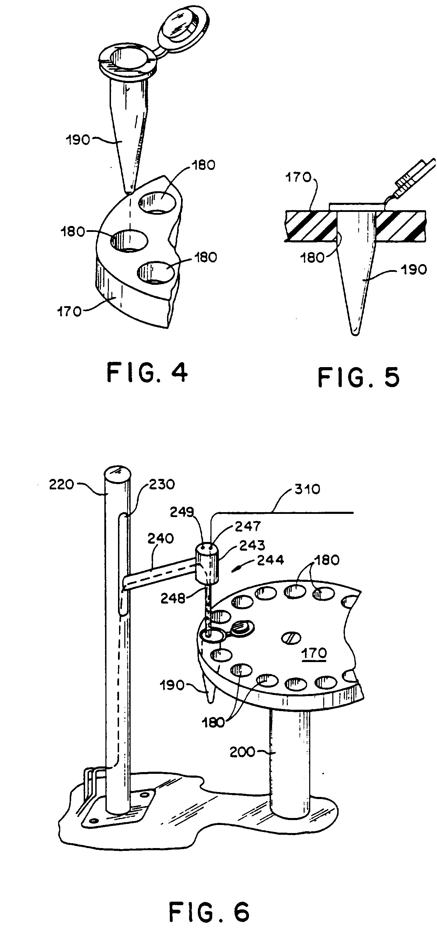

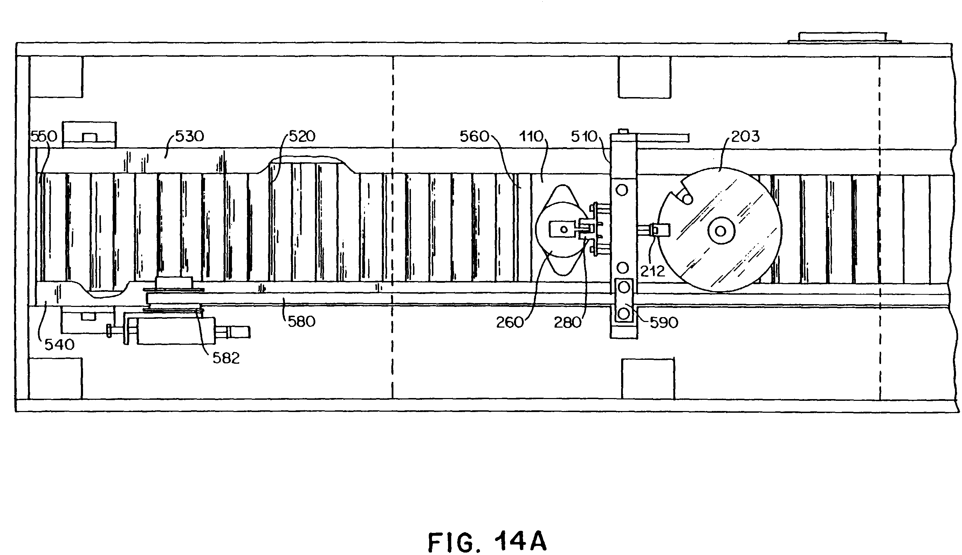

The apparatus 10 utilizes a small-diameter, fused silica flexible quartz tube 310 through which ultraviolet light or fluorescent light used in the detector 290 can pass. The capillary tube, as noted above, may have inside diameter in the range of about 25 microns to about 200 microns and a length in the range of about 10 centimeters to about 100 centimeters. The capillary 350 is supported in the hollow rigid holder 308 and extends through the on-column detector 290 and through the optical sensing element or cuvette therein (Fig. 12). At least the portion of the capillary which passes through the cuvette is transparent to the type of light used in the detector. The input end of the capillary 310 in box 90 extends through hole 247 (Fig. 6) in the cylinder 243 and into the tube 248 to the end thereof so that the capillary can be inserted into a sample cup in table 170. The outlet end of the capillary 350 in box 100 extends through hole 247' in the cylinder 243' and into the hollow tube 248'.

Since high voltages are used in operating the apparatus of the invention, it is clear that the capillary tube and the electrodes 360 and 360' should be spaced apart and insulated from each other.

The apparatus 10 includes a timer control 370 for purpose to be described. The timer control is mounted in the front wall of the support member 20 (Fig. 7) and it includes two rotatable control wheels 372 and 374 each of which carries digits 0 to 9. The timer control is used for controlling the time of application of operating voltage to the apparatus 10 described below and it may be manually or computer controlled.

In open-tubular capillary electrophoresis, using potential differences of about 5 to about 30 KV, an electroosmotic flow of buffer is generated in small bore capillaries which transport solute molecules (analytes) toward a detecting system. Charged analytes also migrate with or against this flow, depending on their mobilities and the intensity of the electroosmotic flow. In some cases, it is desirable to eliminate the electroosmotic flow effect and this can be achieved by providing in the carrier medium in the capillary certain substances such as methyl cellulose or certain electrolytes or polyacrylamide gels. The elimination of the electroosmotic flow effect permits charged particle migration due to the effect of applied voltages.

In the following description of the invention, it is assumed that precautions are taken to diminish electroosmotic flow in order to obtain controllable separations.

In general terms in the electrophoresis process as practiced with the apparatus 10, the capillary tube 310 is filled with a buffer solution which has a pH higher than the highest pK of the protein or other constituent in the sample being analyzed. This provides the desired negative charging of the capillary and the sample to be analyzed and the desired resultant flow of negatively charged sample particles toward the end of the capillary at which positive electrical potential is applied. In operation of the apparatus 10, ground potential is applied to electrode 360' and positive potential is applied to electrode 360. The capillary tube is filled with the desired buffer solution and then a quantity of a sample is injected into the high voltage positive (if a positive high voltage power supply is used) end of the capillary tube 350. The components of the sample become electrically negatively charged and each component takes on a different magnitude of charge as determined by the pH of the buffer solution and the migration takes place in the direction of the electroosmotic flow. The charged components of the sample become spaced apart in the capillary tube and with the proper potential applied, the more highly negatively charged components pass more quickly along the capillary through the on-column detector 290. The detector senses the passage of the charged particles and the recorder 294 prints a pulse for each charged particle with the pulse representing the position of the particles in the flowing stream and the quantity of the particles therein.

More specifically, in operation of the apparatus 10, the following steps are performed:

1. First post 250 is raised to provide access to the free end of the capillary tube 310, and the capillary tube is filled with buffer solution of the selected pH by connecting, through a plastic tube connector, one end to a suction pump and applying mild suction. To insure proper electrical operation of the buffer solution, it is degassed by agitation and vacuum, ultrasonic methods or by the introduction of nitrogen or helium which absorbs oxygen and as an added advantage prevent bacteria growth. Also, all samples and buffers are filtered through 0.22 micrometer filters to eliminate large particles which may clog the capillaries.

2. Next, with the buffer-filled capillary tube properly positioned in the hollow tube 248, the post 250 and arm 240 are raised and the table 170 is rotated to the position where the first sample cup containing a sample to be analyzed is located beneath the tube and the tube is lowered into the sample in the sample cup.

3. The power supply is connected with its positive output at terminal 363 on electrode 360 and the other end is grounded. The timer 370 is set manually or by computer-control for the required number of seconds needed to draw electrokinetically a desired quantity of sample into the input end of the capillary and a voltage in the range of about 5,000 to 10,000 volts is applied. After the set number of seconds have elapsed, a quantity of the sample to be tested is present in the input end of the capillary.

4. Next, the voltage is decreased to zero and then the arm 290 is raised and the table 175 is rotated so that the next sample cup containing buffer fluid is positioned under the arm and the arm is lowered so that tube 248 enters this sample cup.

5. Now, the voltage is increased to up to about 30,000 volts and this voltage is applied for perhaps 10 to 40 minutes, depending on the smallest charge assumed to be present on a component of the sample and to insure that the entire sample passes through the capillary. The sample is drawn through the capillary and through the on-column detector 290 to a sample cup at the other end of the capillary. The same operation may now be performed with other samples to be analyzed.

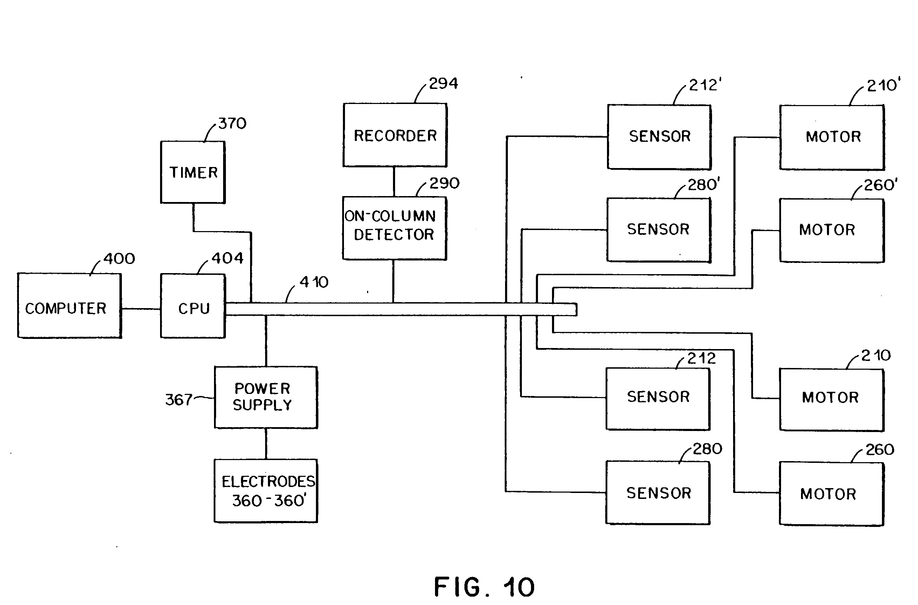

The apparatus of the invention 10 and the foregoing method are automated and computer-controlled in the system shown in Fig. 10. The apparatus shown in Fig. 10 includes a computer 400 having a central processor CPU 404, and a bus 410 which provides pathways for interconnecting the various operating portions of the invention.

The output of the power supply 367 is connected to the electrodes 360, 360' and it is connected to the bus 410 and to the CPU. The timer 370 is also connected to the bus and the CPU which controls the length of time during which power is applied by the power supply to the electrodes 360 and 360'. As noted above, this can also be done manually.

The rotary motors 210 and 210' and the associated sensors 212 and 212' are coupled to the bus and thus to the CPU. Similarly, the up-down motors 260 and 260' and their sensors 280, 280' are coupled to the bus and the CPU. In addition, the on-column detector 290 is coupled to the bus and to the CPU and to the recorder.

In automatic operation of the apparatus 10 controlled by a program set into the computer 400 and CPU 404, first, power is applied to the components of the system including the up-down motors 260, 260' and posts 250 and 250' are raised to raise tubes 248 and 248' above the tables 170 and 170' to the desired height as set into the program. Next, power is applied to the rotary motors 210 and 210' so that the tables 170 and 170' rotate and the disks 203 and 203' are rotated to a position where the slots 205, 205' therein reach the sensors 212, 212' and complete the light paths across the optical sensors 212 and 212'. This places the tables with a selected first hole 180 and sample cups therein under the tubes 248 and 248'. This is considered the normalized or starting position of the apparatus 10.

Next, the operator fills the capillary tube 350 with buffer solution, for example by attaching one end to a suction pump and drawing the degassed buffer solution slowly into the capillary. After the capillary is filled with buffer solution, the end is set in place in the tube 248 or 248' again. At this time, the tube 248 is positioned over the arbitrarily designated first cup and this cup contains the first sample to be analyzed.

If the sample is in the next cup, then motor 210 is energized to move the table a distance controlled by the program which automatically places the next cup, which contains sample, under tube 248.

Now, motor 260 is energized to lower the arm 240 and the apparatus including tube 248 into the cup containing sample material. The power supply is manually or automatically turned on to apply a potential of about 5,000 to 10,000 volts to the electrodes 360 with electrode 360' grounded and this potential is applied for the number of seconds set by the timer 370 and estimated to be required.

During this period of time, a quantity of sample is drawn into the end of the capillary tube. At the end of the selected time, the power is either mechanically or automatically turned off and no additional sample is drawn into the capillary tube. Care must be taken to avoid formation of bubbles in the buffer or any other phenomena which may adversely affect the normal passage of current. The analytes in the sample become charged in the buffer solution.

Next, the up-down motor 260 is energized to raise the post 240 and the associated apparatus and the tube 248 is raised above the table 170. Next, the motor 210 is turned on and the table 170 is automatically rotated so that the next cup 180 containing buffer solution is positioned under the tube 248. Next, the motor 260 is energized to lower the post 240 until the motor is stopped by its sensor 263 at just the point where the tip of the tube 248 is at about the bottom of the cup 190 or is suitable positioned within the buffer solution.

Next, the power supply 367 is manually or automatically switched on to apply a positive potential of about 30,000 volts to the electrode 360 and this causes the charged components or analytes to flow in the direction of the electroosmotic flow through the capillary tube and through the on-column detector 290. The recorder 194 registers a pulse for each component which passes through it.

As the sample passes through the detector, suitable signals pass through the system to energize the appropriate components of the box 100 to receive the sample and then to rotate the table 170' to another position if such is required.

After the first sample is run, a second sample may be run in the same fashion.

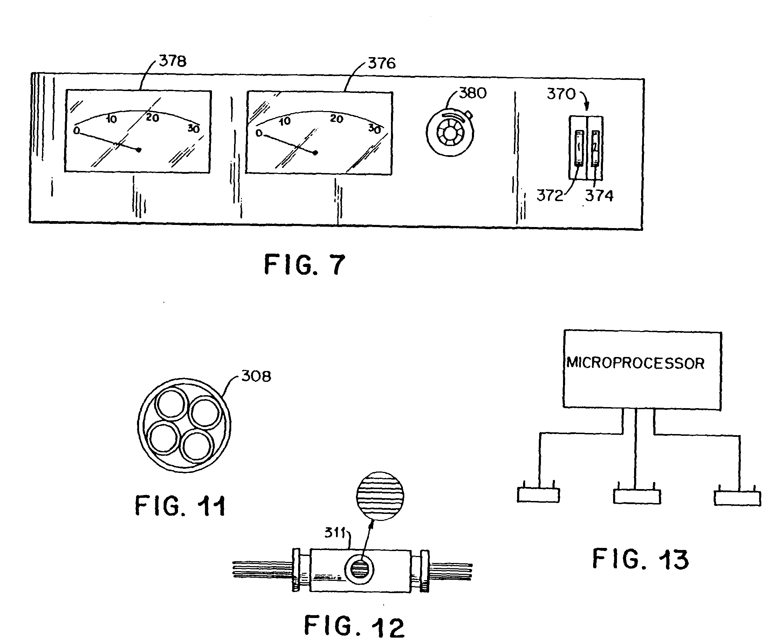

In a modification of the invention, illustrated in Figs. 11 and 12 a plurality of capillary tubes 310 of the same diameter are provided in the holder 308 and they are operated in parallel, or in a bundle, to provide a larger sample handling capacity. Fig. 12 shows multiple capillaries 310 in the detector cuvette 311.

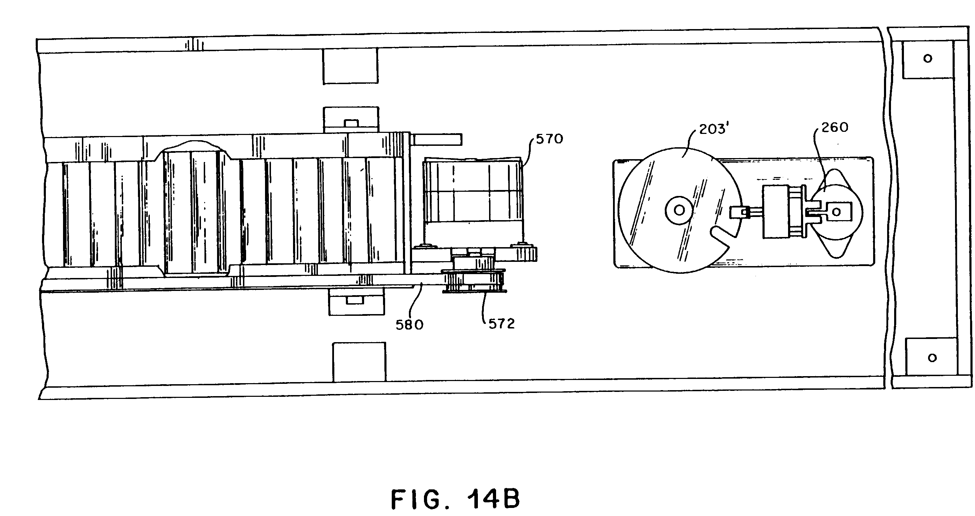

As illustrated in Fig. 13, the computer and microprocessor can control the operation of several apparatus 10 simultaneously.

With respect to the injection of a sample into a capillary, if desired, the sample may be injected manually or in other suitable fashion. In one arrangement, the cups 190 and 190' can be positioned at different elevations, with cup 190' lower, to permit a quantity of sample or other fluid to flow into the sample end of the capillary.

As a modification of the invention, the apparatus 10 can be adapted to include means by which rather than raising and lowering the posts 250 and 250' and their associated apparatus, it raises and lowers either just specific sample cups or the entire tables 170 and 170'. In this embodiment of the invention, the motors 210 and 210' would be constructed to both rotate the posts 200 and 200' and to raise them and lower them vertically as required to raise and lower the tables 170 and 170'. Alternatively, a separate up-down motor 207, 207' (Fig. 3) would be coupled to the table posts 200, 200'.

Since relatively high voltages are used with the apparatus of the invention, means are provided for disconnecting the electrical power if the operator may be exposed to high voltage. This may occur if the operator removes one of the covers 160 and 160' on the boxes 90 or 100. Thus, as a safety measure in one arrangement illustrated in Fig. 2 with respect to box 90, a switch 163 is positioned inside the box on one of the side walls, e.g. wall 120, and close to the cover 160 and adapted to operate with the cover as a power interlock. Thus, for example, with the switch 163 mounted near the cover, the cover carries a pin or arm which closes the switch when the cover is in place and opens the switch when the cover is removed and thus disconnects the high voltage from the apparatus.

In addition, a clamp 164 is coupled to each of the covers 160 and 160' and is hinged to a side wall and positioned to engage the cover. The clamp must be moved before the cover can be removed. Thus, if desired, the switch 163 may be mounted so that it is operated by the clamp or if desired there may be an auxiliary switch (not shown) associated with the clamp.

All of the electrical connections to the switches and power supply used with the apparatus of the invention are not shown, since the connection of switches into the circuit can be easily accomplished by those skilled in the art. The lead 166 represents connections from the switch to the power supply circuit.

It is noted that the use of small diameter capillaries (25-200 microns) reduces the magnitude of temperature (Joule heat) differences within a capillary and minimizes the zone spreading effects usually found in larger diameter capillaries greater than 200 microns.

In a modification of the invention shown in Figs. 14A and 14B and partly in Fig. 1, the box 90 and the parts carried thereby are adapted to slide on the top wall 30 of the support member 20 so that the space between the two boxes 90 and 100 can be adjusted to permit operation of the apparatus with capillary tubes of different lengths.

In this embodiment of the invention, the top wall 30 of the support member 20 is provided with a slot 500 over which the base of the box 90 is positioned. The motors 210 and 260 are secured to the lower surface 32 of the base 110 of the box 90 and beneath the slot 500, and in effect inside the base of the apparatus referring to Figs. 14A and 14B, a vertical insulating plate 510 is secured to the lower surface of the base 110 and extends downwardly therefrom. This plate 510 is disposed between the two motors 210 and 260 on one surface it carries the sensor 212 for the motor 210 and on the other surface it carries the sensor for the disk carried by the motor.

In order to block the slot 500 so that foreign material cannot fall into the support member, a bellows type member 520 is secured in place beneath the top surface of the support member. To support the bellows, a container is provided made up of two L-shaped elongated strips 530 and 540 which are secured to the lower surface of the support member 20 with two end plates 550 and 560 completing the container.

A motor 570 for driving the box 90 is secured to the lower surface of wall 30 of support member 20. The motor 570 carries a drive wheel 572 which is coupled by means of a drive belt 580 to a second wheel 582 located remotely therefrom. Motor 570 is positioned near the end of the wall 30 beneath box 100 and the wheel 582 is positioned near the opposite end of the wall 30 beneath the box 90. Wheel 572 is suitable supported on the wall 30 or another wall of the support member 20. The drive bet 580 is secured to the vertical plate 510 by means of a clamping plate 590 with the belt between the vertical plate and the clamping plate. With this coupling arrangement, when the motor 570 is turned on, it causes the belt 580 to move the vertical plate 510 and the base 110 of the box 90 to which it is secured. As the motor drives the box 90 back and forth, the bellows 520 compresses and expands as required to maintain the slot 500 covered.

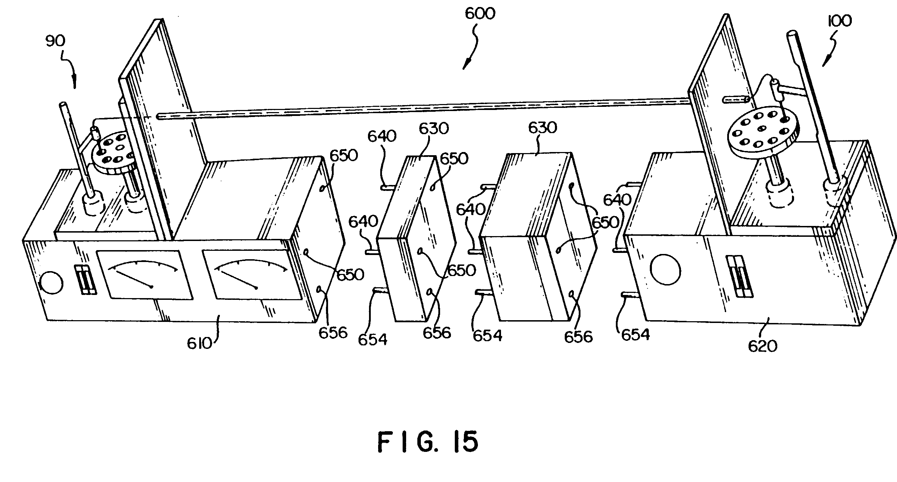

A modification of the foregoing embodiment of the invention is illustrated in Fig. 15. In Fig. 15, capillary electrophoresis apparatus 600 is contructed in modules or sections which can be readily assembled and disassembled to vary the length of the apparatus. Thus, as illustrated in Fig. 15 the apparatus includes end sections 610 and 620 including the boxes 90 and 100 and their associated apparatus and auxiliary sections 630 having the same size and shape as the end sections so that all sections blend together. The auxiliary sections 630, in any desired number, can be inserted between the end sections with coupling being achieved in any suitable manner. In one coupling arrangement, the various sections 610, 620 and 630 may carry pins 640 in their end surfaces which enter holes 650 in the adjacent end surfaces of sections to which they are to be coupled.

In the apparatus shown in Fig. 15, the required electrical connections are made in any suitable manner. For example, the power supply and the controls therefore may all be mounted in one end section, or if desired a power supply and controls may be provided in each end section. In addition, if desired, means such as pins 654 and sockets 656 may be provided in the end surfaces of each section so that when sections are coupled together electrical connections are made automatically between the adjacent contacting surfaces at the same time.

The apparatus 600 has the advantage of simplifying the handling of the various modules. The carrying or shipping of several small modules is more convenient than carrying or shipping a single relatively large apparatus. In addition, the auxiliary sections permit the apparatus to operate with capillary tubes of different lengths.

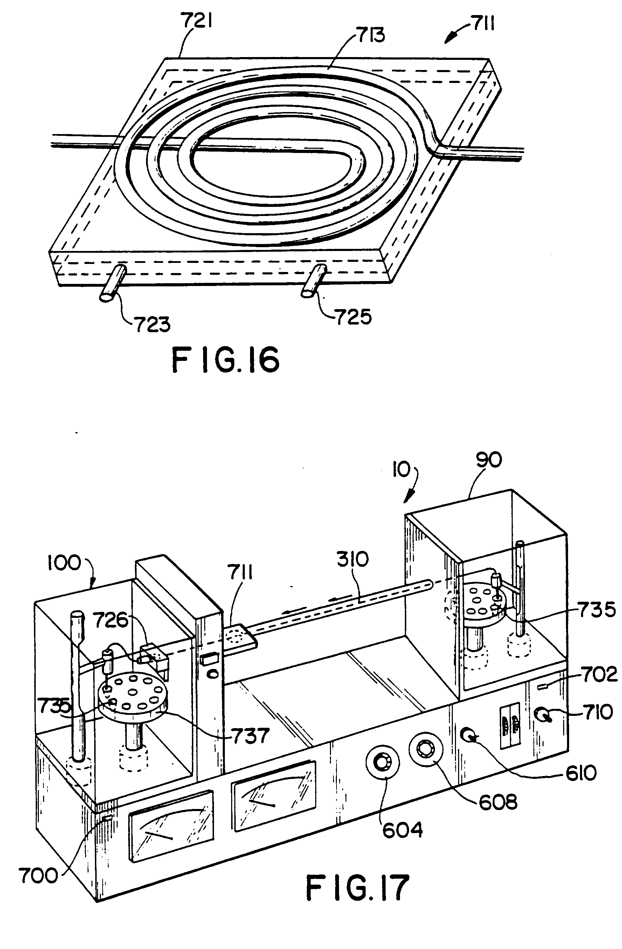

The apparatus of the invention may also use a modified capillary which, as shown in Fig. 16, comprises a capillary cartridge 711. The cartridge includes a capillary cassette which comprises a coiled capillary tube 713 embedded in a body of metal, glass, plastic or the like. In coiled form, the capillary tube may be of any suitable length and it may contain various chemistries. The capillary cassette is held in a housing 721 made up of two plates of metal, glass, plastic or the like coupled by screws or the like. A temperature control fluid, which can be heated or cooled, can be circulated through the housing by way of inlet and outlet tubes 723 and 725. It is noted that the capillary cassette can be easily removed from the housing 721 and replaced by another cassette of different size or other characteristics.

The utility of the capillary assembly 711 as a readily replaceable cartridge which can provide capillaries of different lengths and chemistries will be clear to those skilled in the art. A mounting arrangement for the capillary assembly or cartridge 711 is illustrated in Fig. 17.

In a modification of the invention the electrical apparatus is modified so that operating voltages can be pre-set so that by operating a three position switch, the desired pre-set low voltage can be applied to draw sample into the capillary and then the pre-set high voltage can be applied to cause the sample to pass down the capillary. In the third position, zero voltage is applied, the system is off and no current flows.

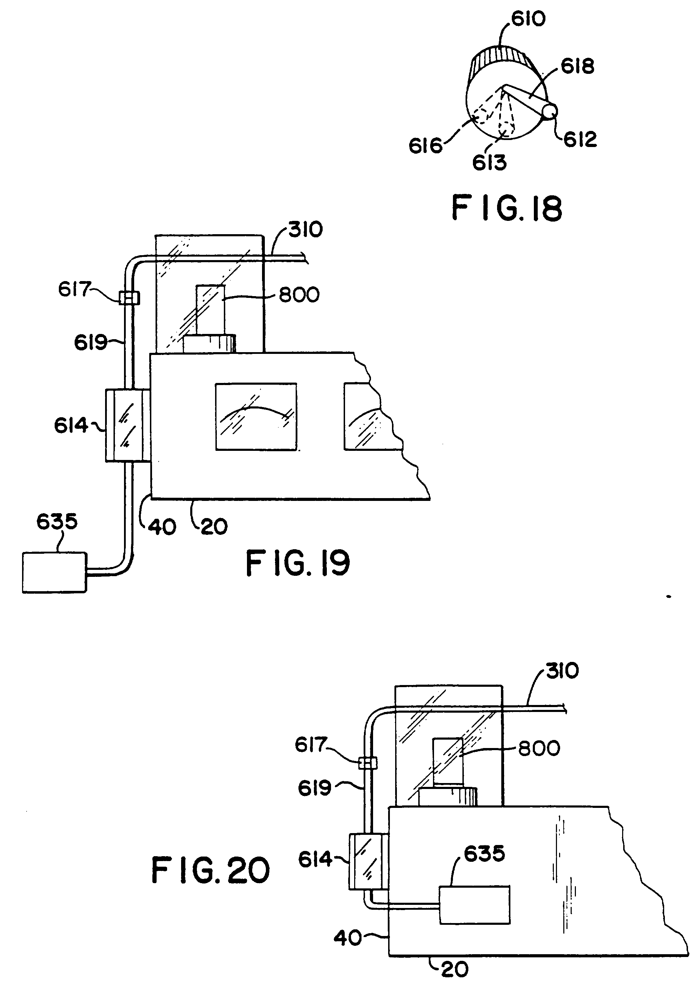

In this embodiment of the invention, as illustrated in Figs. 17 and 18, the front panel of the capillary electrophoresis apparatus 10 described above is modified to include a first potentiometer 604 which is connected to the power supply in the apparatus and is adapted to be set to a selected low voltage and a second potentiometer 608 is connected to the apparatus power supply to be set to a selected high voltage. A single, three-position control switch 610 for applying the voltages set in the potentiometers, in operation of the apparatus, is also mounted on the front panel accessible to the operator. The switch 610, which is shown schematically in Fig. 18 includes a switch arm 618, a low voltage terminal 616, a high voltage terminal 612 and a zero voltage terminal 613.

Thus, in operation of the apparatus shown in Figs. 17 and 18, when it is desired to draw a sample into the capillary 310 by the application of low voltage across the capillary, the switch 610 is set to terminal 616 to apply the low voltage set in potentiometer 604 across the capillary. This operation usually requires seconds of operating time. When it is desired to apply voltage to cause the sample to flow down the capillary tube, then switch 610 is set to contact terminal 612 to apply the high voltage set by potentiometer 608. This operation usually occupies minutes in time. Switch 610 may be embodied in the computer control system, if such is provided, for automatic operation. The terminal 613 of the switch applies zero voltage so that the system, in effect is turned off and no current flows.

In another modification of the invention illustrated in Fig. 19, a magnifying glass 614 is provided coupled to the capillary tube 310 to permit the operator to observe the flow of buffer solution into and along the capillary and to determine whether gas bubbles are present in the buffer solution. It also permits the operator to determine whether there is normal flow of liquid through the capillary tube. If the flow is very slow or if there is no flow at all, this is an indication of a non-functional column, probably due to blockage of flow because large macromolecules or aggregates are adsorbed on the walls of the capillary or because salt solution has evaporated and aggregates of salt have formed a wall-like interface which stops the normal flow of fluid.

In the modification shown in Fig. 19, the magnifying glass 614 is mounted on an end wall 40 of the housing 20 so that is accessible to the user. Capillary tube 310 has its left end coupled through a plastic connector 617 to a connecting tube 619 of metal, glass, plastic or the like behind the magnifying glass to a vacuum or peristaltic pump 635 and the flow of buffer solution or other fluid therethrough can be observed.

In a preferred arrangement, the vacuum or peristaltic pump 635 is a miniature pump which can be mounted within the housing 20 as illustrated in Fig. 20.

After the capillary tube has been filled, tube 619 is removed and the capillary is set in its operating position in the holder described above as shown in Figs. 1 and 17 or in any other selected apparatus.

In Figs. 19 and 20, a beaker 800 is shown at the outlet end of the apparatus to receive samples from the capillary for analysis purposes.

The porous glass joint assembly developed for electrochemical detection can be used to collect samples and to calculate the electroosmotic flow. As mentioned above, the application of a positive high voltage generates a bulk flow of buffer and analytes in the direction of the grounded electrode.

In another modification of the invention, it is possible to calculate the electroosmotic flow in two different ways. One way is to measure the time to generate a drop at the tip of the detection capillary (the capillary tube after the porous glass joint). Then under a microscope the drop is aspirated by capillarity into a piece of capillary column. Since the distance between the two meniscuses formed can be measured by a caliper, the total volume loaded into the piece of capillary tube can now be calculated with the formula of the volume of a cylinder, knowing the internal diameter of the capillary tube (see below).

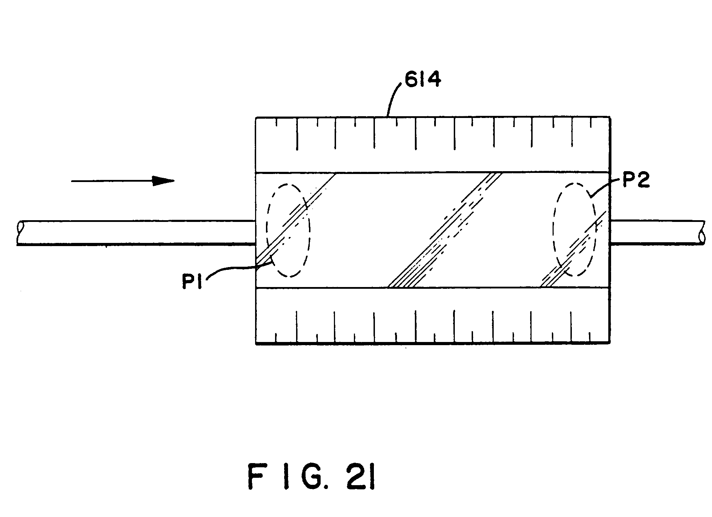

It is also possible to measure the electroosmotic flow, referring to Fig. 21, by observing the meniscus formed by the sample with the magnifier 614 which, for this mode of operation is a high power magnifying glass, or microscope or the like located at the terminal end of the detection capillary 727. When electroosmotic flow takes place in the system, if the distance that the meniscus travels between two points (P1 and P2) is known, one can calculate the volume of the sample by using the equation for a cylinder:

$$V = \pi \times (d^2/4) \times l$$

where V = volume of cylinder, $\pi$ = constant = 3.1416, d = diameter of the cylinder, and l = the distance between the two points (P1 and P2). In addition if the time needed of the meniscus to travel between the two points in the capillary tube 727 is known, one can calculate the electroosmotic rate of flow by using the equation:

Electroosmotic flow = V/t

where V = volume of the cylinder, and t = time needed of the meniscus to travel between points P1 and P2.

The electroosmotic flow for several sets of system parameters is shown in the following Table:

## Table. Theoretical Determination of the Injection Volume and the electroosmotic Flow Using Fused Silica Capillary of Various Internal Diameters. The Results were Based on Values

Determined Empirically with a 75 μm x 100 cm Capillary Column for a Meniscus Migration Length of 3.36 mm, Migration Time of 60 Seconds. The Applied Voltage was 10 KV (100 V/cm)

| Internal Diameter (μm) | Total Net Volume (μl) | Volume of Injection (nl/60 sec) | (nl/15 sec) | Electroosmotic Flow (nl/mm/s x $10^3$) |
|---|---|---|---|---|
| 25 | 0.5 | 1.68 | 0.42 | 8.3 |
| 50 | 2.0 | 6.72 | 1.68 | 33.3 |
| 75 | 4.4 | 14.80 | 3.70 | 73.4 |
| 100 | 7.9 | 26.54 | 6.64 | 131.6 |
| 200 | 31.4 | 105.50 | 26.38 | 523.3 |

This computation is made once for the system parameters, i.e., constant temperature, constant buffer composition, constant capillary column dimensions, constant voltage and amperage pulses, etc.

Alternatively, the distance and the time that the meniscus travel between points P1 and P2 can also be calculated using an electronic sensor system.

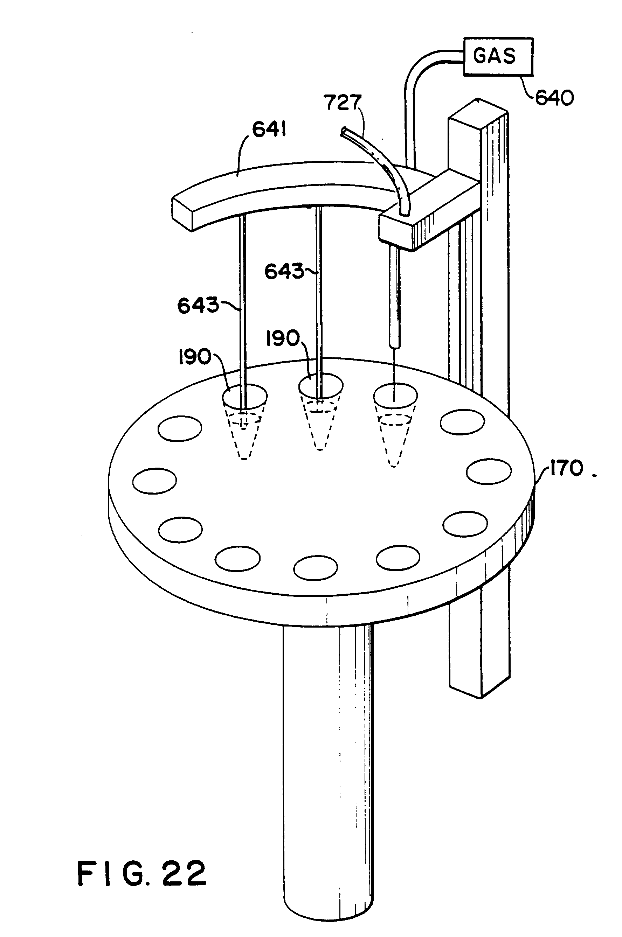

In still another modification of the invention used for degassing the buffer solution, illustrated in Fig. 22, a source 640 of an inert gas such as helium, nitrogen, argon or the like is provided coupled through a manifold 641 and tubes 643 which extend vertically from the manifold 641 to the rotatable table 170. The presence of bubbles in the capillary tube will stop the flow of electrons and the system will not work. Thus degassing of buffers and samples is essential. As the table 170 is rotated the degassing gas is fed into each of the sample cups 190. The microinjector tubes 643 carry small amounts of controllable quantities of gas in order to perform the degassing system as gentle as possible without disturbing or contaminating the sample under study or the buffers necessary for the electrophoresis operation.

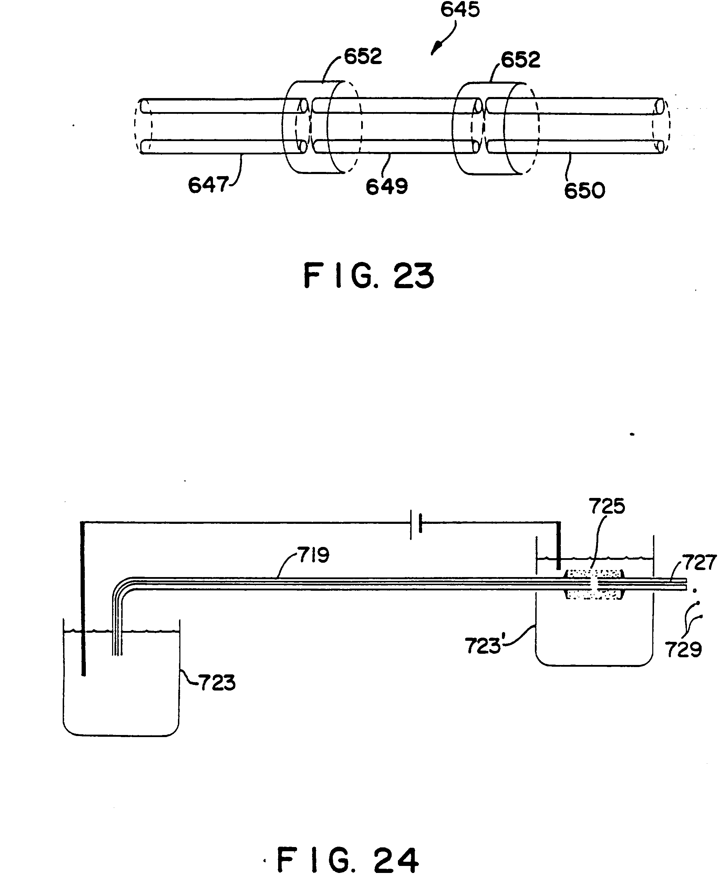

In another modification of the capillary tube used in practicing the present invention, referring to Fig. 23, a capillary tube 645 includes several portions or segments of capillary 647, 649 and 650 each of which may have a different internal coating. The various coatings are selected to prevent macromolecules adsorption to the capillary walls and for separating the components of a sample whereby more efficient sample analysis can be achieved. Silane derivatives are one of the suitable coating materials.

The adjacent ends of the tube portions may be butted end to end and coupled together by sleeves 652 which are secured by a suitable cement such as epoxy to the outer walls of the capillary portions.

In another modification of the invention illustrated schematically in Fig. 24, the inlet end of a capillary tube (separation capillary) 719 is in a container 723 of buffer solution and the outlet end (detection capillary) is inserted into a porous glass sleeve 725 placed in a container 723' of buffer solution. A fused silica capillary tube 727 extends from the end of the capillary 719 out of the buffer container and samples flow as droplets out of the end of the capillary tube where it is recovered.

The porous glass tube 725 is a selective membrane which allows ions to escape but the samples to be analyzed passes through the tubing to be collected.

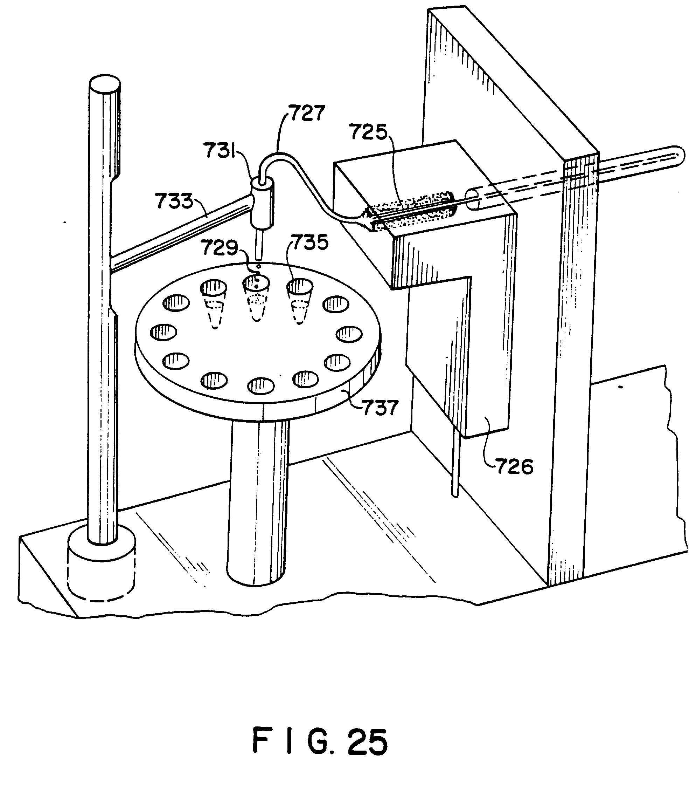

The principles of this invention, used originally for insertion into the open end of the detection capillary of a carbon fiber electrode for electrochemical detection of the solute zones, can be used to provide a fraction collector. As illustrated schematically in Fig. 25, the free end of the capillary tube 727 is directed through a vertical holder 731 coupled to an horizontal arm 733 and positioned over the sample cups 735 in rotatable table 737. In operation of the apparatus shown in Figs. 17 and 25, high positive potential is applied to an electrode in sample cups 735 in box 90 (autosampler or autoinjector side) and ground potential is applied to an electrode in buffer container 726 (fraction collector side). Since ground potential is in the buffer in container 726, there is no potential and no buffer is required in the sample cups 735 in the table 737 in box 100 and these portions of the overall apparatus can be handled without concern for electrical shock.

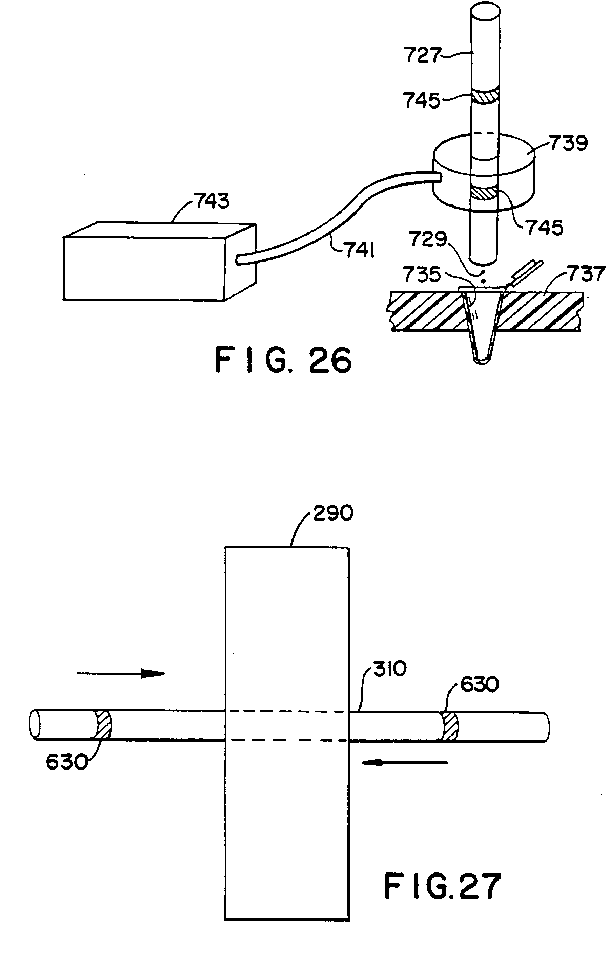

In still another modification of the invention last described and illustrated in Fig. 26, a light sensor 739 is coupled to the end of the tube above the rotatable table and an optical glass fiber 741 or the like is coupled from the sensor to a detector 743. With this apparatus, the sensor senses the passage of a sample 745 and this is detected by the detector which is used to determine when the table should be rotated so that a single sample can be deposited in each sample cup 735.

While the method of operating the apparatus 10, as described above, is satisfactory for many applications and suitable sensitivity is achieved, another method of operation provides improved spectrum analysis and greater ability to identify samples by providing complete spectral analysis. Changes in wavelength increments as little as 1 or 2 mm can be used in order to maximize sensitivity and cover the entire spectral range.

In this mode of operation illustrated in Fig. 27, the detector is set for a first wavelength of operation and, after a sample 630 flows down the capillary tube to the left to the detector 290 and passes through the detector and provides an output pulse from the detector at the first wavelength, the high voltage polarity is reversed and the direction of the flow of the buffer is reversed, therefore the direction of the sample is reversed, and the sample passes to the right through the detector again, with the detector set at a second wavelength. This causes a second pulse to be provided by the detector. Now, the polarity is reversed again and the sample flows is in the original direction to the left and provides an output with the detector set to provide a third wavelength of light. This operation of potential reversal and cycling of the sample back and forth is repeated, at different detector wavelengths of light until a series of pulses is obtained which, when plotted provides two peak wavelengths, with the second peak providing accurate identification of the sample. Almost every pur substance provides such a series of pulses to permit identification thereof.

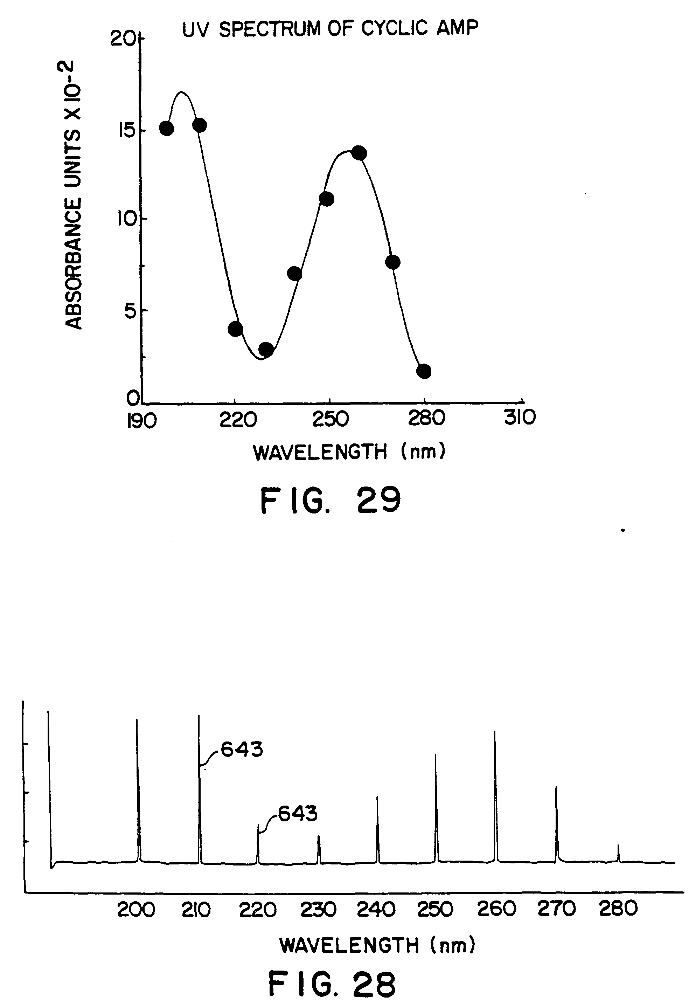

A typical series of pulses 643 which might be obtained to provide a complete spectrum for a sample is illustrated in Fig. 28 along with a plot of wavelength versus absorbance, illustrated in Fig. 29.

Lights or lamps 700 and 702, shown in Fig. 17 on the front panel of the apparatus can be used to indicate in which direction flow is taking place at any instant. In addition, a switch 710 is provided for reversing the high voltage polarity to achieve the cycling operation described above.

After many injections of samples, particularly those containing substances which have a tendency to stick to the walls of the capillary column such as serum or other biological fluids, it is necessary to restore the capillary column. Since commercially available fused-silica capillaries are inexpensive, one way to restore the capillary column is to replace it entirely.

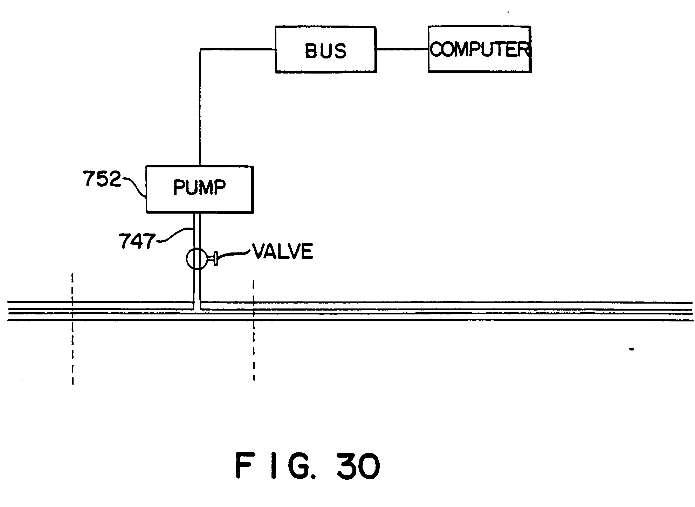

Another alternative is to recycle the capillary column by a cleaning procedure. As seen in Fig. 30, a T-shaped connection 747 is made near the end of the capillary column with a small tube of material such as metal, glass, plastic, teflon or the like. This connection is now part of the capillary column. The connecting tube is attached to a valve 750 and a vacuum pump 752. This system can be operated through computer control allowing the column to be cleaned in a coordinated manner, i.e., by purging with potassium hydroxide, followed by deionized water and buffer aspirated from cups in the rotatable table 170 or other apparatus and discarded via a teflon port leading to a fluid trap. The capillary column is then ready for a new separation test.

## Claims

1. Capillary electrophoresis apparatus comprising a capillary tube (310, 645, 719) of the type which can be electrically charged, said capillary tube having first and second ends, a detector (290) adjacent to said capillary tube, first means (170) at said first end of said capillary tube (310, 645, 719) providing a source of buffer solutions and a source of a sample substance to be analyzed, second means (360) coupled to said apparatus (10) for applying electrical potential across said capillary tube (310, 645, 719) whereby a sample flows through said capillary tube and past said detector, characterized in that said first means includes table means (170, 737) carrying a plurality of sample cups (190, 735) and a holder (220) for holding an end of said capillary tube (310, 645, 719) in operative relation with one of the said cups (190, 735), said cups containing either buffer solution or a sample to be analyzed, and means for moving said table means (170, 737) and said holder (220) with respect to each other so that said first end of said capillary tube (310, 645, 719) can be moved into and out of operative relation with one of said cups (190, 735).

2. The apparatus defined in claim 1, characterized in that said table means is a rotatable table (170) and includes an anular array of holes (180) in which sample cups (190) are seated.

3. The apparatus defined in claims 1 or 2, characterized by including third means at said second end of said capillary tube (310) including second table means (170') and a plurality of second sample cups (190') carried thereby, a second holder (220') for holding said second end of said capillary tube (310) in operative relation with one of said second sample cups (190').

4. The apparatus defined in one of claims 1 - 3, characterized by holder drive means (260, 260') for lowering said first or second holder (220, 220'), respectively, into operative relation with a cup (190, 190') and for raising said first or second holder (220, 220'), respectively, out of operative relation with a cup.

5. The apparatus defined in one of claims 1 - 4, characterized by table drive means (210, 210') for rotating said first or second table means (170, 170'), respectively, with respect to said first or second holder (220, 220'), respectively.

6. The apparatus defined in one of claims 1 - 5, characterized in that said first or second table means (170, 170'), respectively, is movable vertically up and down with respect to said first or second holder (220, 220'), respectively.

7. The apparatus defined in claim 5 or 6, characterized by a vertical post (200, 200') secured to said first or second table means (170, 170'), respectively, and extending downwardly therefrom, and motor means (210, 210') coupled to said vertical post for rotating said first or second table means, respectively, and for driving said first or second table means, respectively, vertically up and down.

8. The apparatus defined in one of claims 1 - 7, characterized in that said first holder (220) is disposed so that said first end of said capillary tube (310) is always positioned over one of said sample cups (190).

9. The apparatus defined in one of claims 1 - 8, characterized in that said first or second holder (220, 220'), respectively, includes a cylindrical portion (243) which has an aperture (247) which is adapted to receive an end of said capillary tube (310) and a hollow tubular portion (248) which extend downwardly from said cylindrical portion (243) and the capillary tube (310) is adapted to be inserted into said hollow tubular portion (248).

10. The apparatus defined in one of claims 1 - 9, characterized by a first electrode (360) in operative relation with said first end of said capillary tube (310) and a second electrode (360') in operative relation with said second end of said capillary tube (310), and means for applying electrical potential between said first and second electrodes.

11. The apparatus defined in claim 10, characterized in that said electrical potential is applied with said first and second ends of said capillary tube (310) seated in buffer solutions.

**12.** The apparatus defined in one of claims 3 - 11, characterized in that a box-like support member (20) having a top wall (30), front and rear walls (40, 50) and left and right end walls (60, 70), a first box enclosure (90) at one end of said support member (20), a second box enclosure (100) at the opposite end of said support member (20), are provided, wherein said box enclosures (90, 100) each include a base member (110, 110'), left and right sidewalls (120, 130), front and rear walls (140, 150) and a removable cover (160), said first table means (170) and said first holder (220) are disposed within said first box enclosure (90), said second table means (170') and said second holder (220') are disposed within said second box enclosure (100) and said capillary tube (310) extends from said first box enclosure (90) to said second box enclosure (100) and has one end disposed within said first hollow tube (248) and the other end of said capillary tube disposed within said second hollow tube (248).

**13.** The apparatus defined in claim 12, characterized in that said first or second table means (170, 170'), respectively, is supported on a vertical post (200, 200') which extends below the top wall (30) of said support member (20) and includes a lower post portion thereat, and by a motor (210) coupled to said lower post portion beneath said top wall (30) of said support member (20), a horizontal sensor disk (203) secured to said lower post portion and adapted to be rotated thereby, and an optical sensor (212) coupled to said horizontal disk (203) and adapted to operate said motor (210) in response to the position of said sensor disk with respect to the sensor.

**14.** The apparatus defined in claim 13, characterized in that said motor (210) is supported on the lower surface of said top wall (30) of said support member (20).

**15.** The apparatus defined in one of claims 12 - 14, characterized by power interlock means (163) associated with the covers (160) of said boxes (90, 100) for disconnecting electrical power when a cover is removed.

**16.** The apparatus defined in one of claims 1 - 15, characterized in that said holder (220) comprises a hollow tube (420) having a slot (426) in its side wall, a vertical post (250) inside said holder and adapted to move vertically up and down, a horizontal arm (428) extending laterally from said vertical post (250) through said slot (426).

**17.** The apparatus defined in claim 16, characterized in that first electrode is a film electrode (432).

**18.** The apparatus defined in one of claims 4 - 17, characterized by electronic circuit for automatically synchronizing the operation of said first or second holder drive means (260, 260'), respectively, and said first or second table drive means (210, 210'), respectively, so that in a sequence of operations, said first or second holder (220, 220') respectively, is raised above said table means (170, 170') and then said table means is rotated to a position where a selected cup (190, 190') is beneath said holder, and then said holder is lowered so that said first end of said capillary tube (310) is in said cup.

**19.** The apparatus defined in one of claims 16 - 18, characterized by said vertically moveable post (250) having a lower post portion extending downwardly through the base member (110) of said box (90, 100) to beneath said top wall (30) of said support member (20), a motor (260, 260') coupled to said lower post portion to drive said post up and down, an optical sensor (280) positioned adjacent to said lower post position, and a means (263) carried on said lower post position and positioned to operate with said optical sensor (280) to control the operation of said motor.

**20.** The apparatus defined in one of claims 3 - 19, characterized by means for varying the spacing between said first and second holders (220, 220') and the operating length of the capillary (310) tube therebetween.

**21.** The apparatus defined in claim 20, characterized in that said first box (90) being mounted on said top wall (30), and said second box (100) being slidable mounted on said top wall (30) and secured to mounting means (570, 580) disposed beneath said top wall and within said box-like support member (20).

**22.** The apparatus defined in claim 21, characterized in that said mounting means includes a first rotatable wheel (572) and a second rotatable wheel (582) spaced from said first rotatable wheel, a drive belt (580) coupled to said rotatable wheels (572, 582), a drive motor (570) coupled to said first rotatable wheel (572), and means (590) coupled to said belt (580) and said second box (100) whereby operation of said drive motor (570) and movement of said drive belt cause said second box to slide along said top wall (30) to assure different spacings from said first box (90).

**23.** The apparatus defined in claim 22, characterized by an aperture extending along a portion of the length at said top wall (30), and by a bellow-type screen (520) disposed along said aperture in said top wall to prevent foreign objects from falling into said box-like support member (20).

24. The apparatus defined in one of claims 20 - 23, characterized by means supporting a capillary tube between said first box (90) and said second box (100), and means (630) associated with said box-like support member for varying the spacing between said first box (90) and said second box (100) whereby capillary tubes (310) of different lengths can be supported therebetween.

25. The apparatus defined in one of claims 1 - 24, characterized by a removable coiled capillary cartridge support (711) containing a coiled capillary (713) coupled to said capillary tube (310).

26. The apparatus defined in claim 25, characterized in that said capillary tube is in form of a coil of glass tubing (713).

27. The apparatus defined in claim 26, characterized in that said coil of glass tubing (713) is secured to a support member (721) made of plastic, metal, glass, or the like, in particular containing a cooling system to control the temperature of the capillary, comprising an inlet (723) and an outlet (725) to circulate a fluid thus maintain a regulated wide range of temperature within the support member.

28. The apparatus defined in one of claims 1 - 27, characterized by a magnifying glass (614) coupled to said capillary tube (310, 619) for viewing the flow of fluid through said capillary tube.

29. The apparatus defined in claim 28, characterized in that said magnifying glass (614) permits observation of the sample meniscus (P1, P2) in said capillary tube to determine electroosmotic flow therein.

30. The apparatus defined in one of claims 1 - 29 and including a pump (625) coupled to the output end (615) of said capillary tube.

31. The apparatus defined in claim 30, characterized in that said pump (635) comprises a miniature pump mounted inside said housing (20).

32. The apparatus defined in one of claims 1 - 31, characterized by a source (640) of an oxygen absorbent gas or an inert gas to said table means (170) for introduction of said gas into sample cups (190) to remove air bubbles therefrom.

33. The apparatus defined in claim 32, characterized in that said gas is a gas selected from the group of gases including helium, nitrogen and argon.

34. The apparatus defined in one of claims 1 - 33, characterized by means (710) for operating said second means to cause said electrical potential to be cyclically reversed to cause said sample to move first in one direction through said detector (290) to provide a series of detector pulses for identification of the sample.

35. The apparatus defined in claim 34, characterized in that said second means (360, 360') are reversible to cause said sample material to flow in the reverse direction to said first direction to cause said sample material to pass through said detector (290) to provide a second detector pulse, and means are provided for toggling said second means to cause said sample substance to pass back and forth through said detector and providing thereby multiple detector pulses.

36. The apparatus defined in one of claims 1 - 35, characterized in that said capillary tube (310) having an inside diameter in the range of 25 microns to about 200 microns.

37. The apparatus defined in one of claims 1 - 36, characterized in that said capillary tube comprises a plurality of sections (647, 649, 650) coupled together end to end, the internal surfaces of said sections coated with different chemicals.

38. The apparatus defined in claim 37, characterized in that the adjacent ends of said sections are butted together and are secured together by means of a surrounding sleeve (652) which is secured to outer surfaces of said capillary sections.

39. The apparatus defined in one of claims 1 - 38, characterized by a porous glass tube (725) receiving the first or second end of said capillary tube and an auxiliary tube (727) in said porous glass tube (725) having one end adjacent to the first or second end of said capillary tube and adapted to receive a sample from said capillary tube, said auxiliary tube (727) having an outlet end from which the sample exits to a collection means.

40. The apparatus defined in claim 39, characterized in that the outlet end of said auxiliary tube (727) is positioned over said table means (737), for receiving samples from said auxiliary tube (727).

41. The apparatus defined in claim 40, characterized by a sensor (739) at the outlet end of said auxiliary tube (727), an optical glass fiber (741) coupled at one end to said sensor (739) and at the other end to a detector (743) for detecting the passage of a sample through said auxiliary tube (727) whereby rotation of said table means may be effected as each sample appear.

42. The apparatus defined in one of claims 1 - 41, characterized by a detector coupled to the output end of said capillary tube for detecting the passage of sample therethrough.

43. The apparatus defined in one of claims 1 - 42, characterized by a T-shaped section (747) of capillary tube inserted in said capillary tube and coupled to a source of cleaning fluid usable to clean said capillary tube.

44. The apparatus defined in one of claims 4, 5, and 10 - 43 including a computer (400) for controlling the operation of the apparatus, a bus (410) connected to said computer (400), a power supply (367) having terminals adapted to provide a plurality of output voltages therebetween, said power supply (367) also being connected to said bus (410) and to said computer (400) whereby its operation and the application of selected voltages to said electrodes (360, 360') can be controlled and sequenced, a timer control (370) coupled to said bus (410) and to said computer (400) for controlling the time duration of the application of operating voltages to said electrodes (360, 360') by said power supply, said first and second holder drive means (260, 260') being electrically coupled to said bus (410) and to said computer (400) whereby the operation thereof can be automatically controlled, first and second holder drive sensor means (280, 280') in operative relation with said first and second holder drive means (260, 260') for controlling the movement thereof, said first and second table drive means (210, 210') coupled electronically to said bus (410) and to said computer (400), first and second table drive sensor means (212, 212') associated with said first and second table drive means (210, 210'), respectively to control the operation thereof, a clock control means in said computer, said computer operating to:

    a) turn on said first and second holder drive means (260, 260') to raise said first and second holders (220, 220') a predetermined amount which raises said first and second holders above said first and second table means (170, 170') respectively,

    b) turn on said first an second table drive means (210, 210') to rotate said first and second table means (170, 170') to a starting position under the control of said first and second table drive sensor means (212, 212'),

    c) turn on said first and second holder drive means (260, 260') to lower said first and second holders (220, 220') an amount determined by said first and second holder drive sensor means (280, 280') which places said holders and said input and output ends of said capillary tube, which is filled with buffer solution, in a first cup containing a sample substance to be analyzed,

    d) cause a sample fluid to be injected into said capillary tube (310); and

    e) cause said sample to flow along said capillary tube (310).

45. The method of detecting the nature of a sample of a substance by capillary electrophoresis by using the apparatus according to one of claims 1 to 44 comprising the steps of passing a substance to be analyzed in one direction through a detector to obtain a pulse representative of the optical wavelength of said sample, characterized by passing said substance in the opposite direction through said detector to obtain a second pulse representative of the optical wavelength of said sample and, continuing the process of passing said substance back and forth through said detector to obtain a series of pulses which combine to provide accurate identification of the sample.

**Patentansprüche**

1. Kapillare Elektrophorese-Vorrichtung mit einem Kapillarrohr (310, 645, 719) von der Art, die elektrisch geladen werden kann, wobei dieses Kapillarrohr ein erstes und ein zweites Ende aufweist, einem dem Kapillarrohr benachbarten Detektor (290), ersten Mitteln (170) am ersten Ende des Kapillarrohrs (310, 645, 719), die eine Quelle von Pufferlösungen und eine Quelle einer zu analysierenden Probensubstanz bereitstellen, zweite mit der Vorrichtung (10) verbundenen Mitteln (360) zum Anlegen eines elektrischen Potentials über das Kapillarrohr (310, 645, 719), wobei eine Probe durch das Kapillarrohr und durch den Detektor fließt, dadurch gekennzeichnet, daß die ersten Mittel eine Tischeinrichtung (170, 737) beinhalten, die eine Vielzahl von Probenbehältern (190, 735) und einen Halter (220) tragen zum Halten eines Endes des Kapillarrohres (310, 645, 719) in betriebsbereiter Beziehung mit einem der Behälter (190, 735), wobei die Behälter entweder eine Pufferlösung oder eine zu analysierende Probe beinhalten, und Mittel zum Bewegen der Tischeinrichtung (170, 737) und des Halters (220) relativ zueinander, so daß das erste Ende des Kapillarrohrs (310, 645, 719) in und heraus aus der betriebsbereiten Beziehung mit einem der Behälter (190, 735) bewegt werden kann.

2.  Vorrichtung nach Anspruch 1, dadurch gekennzeichnet, daß die Tischeinrichtung ein drehbarer Tisch (170) ist und eine ringförmige Anordnung von Öffnungen (180) aufweist, in die Probenbehälter (190) gesetzt sind.

3.  Vorrichtung nach Anspruch 1 oder 2, gekennzeichnet durch das Aufweisen von dritten Mitteln an dem zweiten Ende des Kapillarrohrs (310), die eine zweite Tischeinrichtung (170') enthalten, und eine Vielzahl von zweiten Probenbehältern (190'), die davon getragen sind, einen zweiten Halter (220') zum Halten des zweiten Endes des Kapillarrohrs (310) in betriebsbereiter Beziehung mit einem der zweiten Probenbehälter (190').

4.  Vorrichtung nach einem der Ansprüche 1 bis 3, gekennzeichnet durch Halterantriebsmittel (260, 260') zum Absenken des ersten bzw. zweiten Halters (220, 220') in die betriebsbereite Beziehung mit einem Behälter (190, 190') und zum Anheben des ersten bzw. zweiten Halters (220, 220') heraus aus der betriebsbereiten Beziehung mit einem Behälter.

5.  Vorrichtung nach einem der Ansprüche 1 bis 4, gekennzeichnet durch Tischantriebsmittel (210, 210') zum Drehen der ersten bzw. zweiten Tischeinrichtung (170, 170'), relativ zum ersten bzw. zweiten Halter (220, 220').

6.  Vorrichtung nach einem der Ansprüche 1 bis 5, dadurch gekennzeichnet, daß die erste bzw. zweite Tischeinrichtung (170, 170') vertikal auf und ab bewegbar ist relativ zu dem ersten bzw. zweiten Halter (220, 220').

7.  Vorrichtung nach Anspruch 5 oder 6, gekennzeichnet durch einen vertikalen Pfosten (200, 200'), der an der ersten bzw. zweiten Tischeinrichtung (170, 170') befestigt ist und sich davon nach unten erstreckt und eine Motoreinrichtung (210, 210'), die mit dem vertikalen Pfosten verbunden ist, um die erste bzw. zweite Tischeinrichtung zu drehen und um die erste bzw. zweite Tischeinrichtung vertikal nach oben und unten zu bewegen.

8.  Vorrichtung nach einem der Ansprüche 1 bis 7, dadurch gekennzeichnet, daß der erste Halter (220) so angeordnet ist, daß das erste Ende des Kapillarrohrs (310) immer über einem der Probenbehälter (190) positioniert ist.

9.  Vorrichtung nach einem der Ansprüche 1 bis 8, dadurch gekennzeichnet, daß der erste bzw. zweite Halter (220, 220') einen zylindrischen Abschnitt (243) enthält, der eine Öffnung (247) hat, die geeignet ist, um ein Ende des Kapillarrohrs (310) aufzunehmen und einen hohlen röhrenförmigen Abschnitt (248), der sich abwärts von dem zylindrischen Abschnitt (243) erstreckt, und daß das Kapillarrohr (310) geeignet ist, in den hohlen rohrenförmigen Abschnitt (248) eingeführt zu werden.

10. Vorrichtung nach einem der Ansprüche 1 bis 9, gekennzeichnet durch eine erste Elektrode (360) in betriebsbereiter Beziehung mit dem ersten Ende des Kapillarrohrs (310) und eine zweite Elektrode (360') in betriebsbereiter Beziehung mit dem zweiten Ende des Kapillarrohrs (310) und Mittel zum Anlegen eines elektrischen Potentials zwischen der ersten und zweiten Elektrode.

11. Vorrichtung nach Anspruch 10, dadurch gekennzeichnet, daß das elektrische Potential an dem ersten und zweiten Ende des Kapillarrohrs (310), die in Pufferlösungen sitzen, angelegt wird.

12. Vorrichtung nach einem der Ansprüche 3 bis 11, dadurch gekennzeichnet, daß ein kastenähnliches Halterungsteil (20) vorgesehen ist, mit einer oberen Wand (30), einer vorderen und rückwärtigen Wand (40, 50) und einer linken und rechten Abschlußwand (60, 70), einer ersten Behältereinfassung (90) an einem Ende des Halterungsteils (20), eine zweite Behältereinfassung (100) an dem gegenüberliegenden Ende des Halterungsteils (20), wobei jede Behältereinfassung (90, 100) ein Basisteil (110, 110'), eine rechte und linke Seitenwand (120, 130), eine vordere und rückwärtige Wand (140, 150) und eine abnehmbare Abdeckung (160) aufweist, und daß die erste Tischeinrichtung (170) und der erste Halter (220) innerhalb der ersten Behältereinfassung (90) angeordnet sind, daß die zweite Tischeinrichtung (170') und der zweite Halter (220') innerhalb der zweiten Behältereinfassung (100) angeordnet sind und daß das Kapillarrohr (310) sich von der ersten Behältereinfassung (90) zu der zweiten Behältereinfassung (100) erstreckt und ein Ende innerhalb des ersten hohlen Rohres (248) angeordnet hat und das andere Ende des

**EP 0 397 699 B1**

Kapillarrohrs innerhalb des zweiten hohlen Rohres (248) angeordnet hat.

13. Vorrichtung nach Anspruch 12, dadurch gekennzeichnet, daß die erste bzw. zweite Tischeinrichtung (170, 170') von einem vertikalen Pfosten (200, 200') getragen ist, der sich unterhalb der oberen Wand (30) des Halterungsteils (20) erstreckt und da einen unteren Pfostenabschnitt aufweist, und daß ein Motor (210) mit dem unteren Pfostenabschnitt unterhalb der oberen Wand (30) des Halterungsteils (20) verbunden ist, und eine horizontale Sensorscheibe (203) an dem unteren Pfostenabschnitt befestigt ist und geeignet ist, dadurch gedreht zu werden, und einen optischen Sensor (212) der mit der horizontalen Scheibe (203) verbunden ist und geeignet ist, den Motor (210) zu betreiben, in Abhängigkeit von der Position der Sensorscheibe in Bezug zu dem Sensor.

14. Vorrichtung nach Anspruch 13, dadurch gekennzeichnet, daß der Motor (210) auf der unteren Oberfläche der oberen Wand (30) des Halterungsteils (20) getragen ist.

15. Vorrichtung nach einem der Ansprüche 12 bis 14, gekennzeichnet durch eine Leistungsunterbrechungsvorrichtung (163), die mit den Abdeckungen (160) der Behälter (90, 100) verbunden ist, um die elektrische Leistung zu unterbrechen, wenn eine Abdekkung entfernt wird.

16. Vorrichtung nach einem der Ansprüche 1 bis 15, dadurch gekennzeichnet, daß der Halter (220) ein hohles Rohr (420) beinhaltet, das einen Schlitz (426) in seiner Seitenwand, einen vertikalen Pfosten (250) innerhalb des Halters, der geeignet ist, sich vertikal auf und ab zu bewegen, einen horizontalen Arm (428), der sich seitlich von dem vertikalen Pfosten (250) durch den Schlitz (426) erstreckt, aufweist.

17. Vorrichtung nach Anspruch 16, dadurch gekennzeichnet, daß die erste Elektrode eine Filmelektrode (432) ist.

18. Vorrichtung nach einem der Ansprüche 4 bis 17, gekennzeichnet durch eine elektronische Schaltung, zum automatischen Synchronisieren des Betriebs der ersten bzw. zweiten Halterantriebseinrichtung (260, 260') und der ersten bzw. zweiten Tischantriebseinrichtung (210, 210'), so daß in einer Betriebssequenz der erste bzw. zweite Halter (210, 210') über die Tischeinrichtungen (170, 170') angehoben wird und dann die Tischeinrichtung zu einer Position gedreht wird, wo ein ausgewählter Behälter (190, 190') unterhalb des Halters ist, und dann der Halter abgesenkt wird, so daß das erste Ende des Kapillarrohrs (310) in diesem Behälter ist.

19. Vorrichtung nach einem der Ansprüche 16 bis 18, gekennzeichnet durch einen vertikal bewegbaren Pfosten (250), der einen unteren Pfostenabschnitt hat, der sich nach unten durch das Basisteil (110) des Behälters (90, 100) erstreckt, bis unterhalb der oberen Wand (30) des Halterungsteils (20), einen Motor (260, 260'), der mit dem unteren Pfostenabschnitt verbunden ist, um den Pfosten auf- und abwärts zu bewegen, einen optischen Sensor (280), der einem unteren Pfostenabschnitt benachbart positioniert ist, und Mittel (263), die auf der unteren Pfostenposition getragen sind und positioniert werden, um mit dem optischen Sensor (280) zu arbeiten, um den Betrieb des Motors zu steuern.

20. Vorrichtung nach einem der Ansprüche 3 bis 19, gekennzeichnet durch Mittel, um den Abstand zwischen dem ersten und zweiten Halter (220, 220') und die Betriebslänge des Kapillarrohrs (310) dazwischen zu variieren.

21. Vorrichtung nach Anspruch 20, dadurch gekennzeichnet, daß der erste Behälter (90) auf der oberen Wand (30) montiert ist, und daß der zweite Behälter (100) verschiebbar auf der oberen Wand (30) montiert ist und an den Montagemitteln (570, 580) befestigt ist, die unterhalb der oberen Wand und innerhalb des kastenähnlichen Halterungsteils (20) angeordnet sind.

22. Vorrichtung nach Anspruch 21, dadurch gekennzeichnet, daß die Montagemittel ein erstes drehbares Rad (572) und ein zweites drehbares Rad (582), das von dem ersten drehbaren Rad beabstandet ist, ein Treibriemen (580), der mit den drehbaren Rädern (572, 582) verbunden ist, einen Antriebsmotor (570), der mit dem ersten drehbaren Rad (572) verbunden ist, und Mittel (590), die mit dem Treibriemen (580) und dem zweiten Behälter (100) verbunden sind, aufweisen, wobei der Betrieb des Antriebsmotors (570) und die Bewegung des Treibriemens den zweiten Behälter veranlassen, entlang der oberen Wand (30) zu gleiten, um unterschiedliche Abstände von dem ersten Behälter (90) sicherzustellen.

23. Vorrichtung nach Anspruch 22, gekennzeichnet durch eine Öffnung, die sich entlang eines Abschnitts der Länge an der oberen Wand (30) erstreckt und durch eine balgenartige Abdeckung (520), die entlang der Öffnung in der oberen Wand angeordnet ist, um zu verhindern, daß Fremdkörper in den kastenähnlichen Halterungsteil (20) fallen.

17

24. Vorrichtung nach einem der Ansprüche 20 bis 23, gekennzeichnet durch Mittel, die ein Kapillarrohr zwischen dem ersten Behälter (90) und dem zweiten Behälter (100) unterstützen und Mittel (630), die dem kastenähnlichen Halterungsteil zugeordnet sind, um den Abstand zwischen dem ersten Behälter (90) und dem zweiten Behälter (100) zu variieren, wobei die Kapillarrohre (310) mit verschiedenen Längen dazwischen gestützt werden können.

25. Vorrichtung nach einem der Ansprüche 1 bis 24, gekennzeichnet durch eine herausnehmbare, gewickelte kapillarförmige Kartuschenhalterung (711), die eine gewickelte Kapillare (713) enthält, die mit dem Kapillarrohr (310) verbunden ist.

26. Vorrichtung nach Anspruch 25, dadurch gekennzeichnet, daß das Kapillarrohr in Form einer Spirale eines Glasrohrs (713) ist.

27. Vorrichtung nach Anspruch 26, dadurch gekennzeichnet, daß die Spirale eines Glasrohrs (713) an einem Trageteil (721) aus Kunststoff, Metall, Glas oder dergleichen befestigt ist, das insbesondere ein Kühlsystem aufweist, um die Temperatur der Kapillare zu steuern, und das einen Einlaß (723) und einen Auslaß (725) aufweist, um ein Fluid zu zirkulieren, um so einen gesteuerten weiten Temperaturbereich innerhalb des Halterungsteils aufrechtzuerhalten.

28. Vorrichtung nach einem der Ansprüche 1 bis 27, gekennzeichnet durch ein Vergrößerungsglas (614), das mit dem Kapillarrohr (310, 619) verbunden ist, um den Fluidstrom durch das Kapillarrohr zu beobachten.

29. Vorrichtung nach Anspruch 28, dadurch gekennzeichnet, daß das Vergrößerungsglas (614) die Beobachtung des Probenmeniskus (P1, P2) in dem Kapillarrohr erlaubt, um den elektroosmotischen Fluß darin zu bestimmen.

30. Vorrichtung nach einem der Ansprüche 1 bis 29, die eine Pumpe (625) aufweist, die mit dem Auslaßende (615) des Kapillarrohrs verbunden ist.

31. Vorrichtung nach Anspruch 30, dadurch gekennzeichnet, daß die Pumpe (635) eine Miniaturpumpe aufweist, die innerhalb des Gehäuses (20) montiert ist.

32. Vorrichtung nach einem der Ansprüche 1 bis 31, gekennzeichnet durch eine Quelle (640) eines sauerstoffabsorbierenden Gases oder eines inerten Gases, für die Tischeinrichtung (170), um dieses Gas in die Probenbehälter (190) einzuleiten, um Luftblasen darin zu entfernen.

33. Vorrichtung nach Anspruch 32, dadurch gekennzeichnet, daß das Gas ein Gas ist, das aus der Gruppe der Gase, die Helium, Stickstoff und Argon beinhaltet, ausgewählt ist.

34. Vorrichtung nach einem der Ansprüche 1 bis 33, gekennzeichnet durch Mittel (710) zum Betreiben der zweiten Mittel, um zu bewirken, daß das elektrische Potential zyklisch umgekehrt wird, um die Proben zuerst in die eine Richtung durch den Detektor (290) bewegen zu lassen, um eine Serie von Detektorimpulsen zu erhalten für die Identifikation der Probe.

35. Vorrichtung nach Anspruch 34, dadurch gekennzeichnet, daß die zweiten Mittel (360, 360') reversibel sind, um das Probenmaterial in die umgekehrte Richtung zu der ersten Richtung fließen zu lassen, um das Probenmaterial durch den Detektor (290) fließen zu lassen, um einen zweiten Detektorimpuls zu erhalten, und daß Mittel vorgesehen sind, um die zweiten Mitteln hin- und herzuschalten, um zu veranlassen, daß die Probensubstanz hin- und her durch den Detektor fließt, und dadurch Mehrfach-Detektorimpulse zu erhalten.

36. Vorrichtung nach einem der Ansprüche 1 bis 35, dadurch gekennzeichnet, daß das Kapillarrohr (310) einen Innendurchmesser im Bereich von 25 Mikron bis 200 Mikron hat.

37. Vorrichtung nach einem der Ansprüche 1 bis 36, dadurch gekennzeichnet, daß das Kapillarrohr eine Vielzahl von Abschnitten (647, 649, 650) aufweist, die zusammen Ende an Ende verbunden sind, und daß die inneren Oberflächen dieser Abschnitte mit unterschiedlichen Chemikalien beschichtet sind.

38. Vorrichtung nach Anspruch 37, dadurch gekennzeichnet, daß die angrenzenden Enden der Abschnitte zusammengefügt sind und zusammen mit Hilfe einer umgebenden Muffe (652) gehalten sind, die an den äußeren Oberflächen der kapillaren Abschnitte befestigt ist.

**39.** Vorrichtung nach einem der Ansprüche 1 bis 38, gekennzeichnet durch ein poröses Glasrohr (725), das das erste oder zweite Ende des Kapillarrohrs enthält, und ein Hilfsrohr (727) in dem porösen Glasrohr (725), das ein Ende zu dem ersten oder zweiten Ende des Kapillarrohrs benachbart hat und das geeignet ist eine Probe von dem Kapillarrohr zu empfangen, wobei das Hilfsrohr (727) ein Auslaßende hat, von dem die Probe in eine Sammeleinrichtung ausläuft.

**40.** Vorrichtung nach Anspruch 39, dadurch gekennzeichnet, daß das Auslaßende des Hilfsrohrs (727) über der Tischeinrichtung (737) positioniert ist, um die Proben von dem Hilfsrohr (727) zu empfangen.

**41.** Vorrichtung nach Anspruch 40, gekennzeichnet durch einen Sensor (739) an dem Auslaßende des Hilfsrohrs (727), eine optische Glasfaser (741) die mit einem Ende dieses Sensors (739) und an dem anderen Ende mit einem Detektor (743), um den Durchgang der Probe durch das Hilfsrohr (727) zu erfassen, verbunden ist, wobei die Drehung der Tischeinrichtung bewirkt werden kann, so wie jede Probe erscheint.

**42.** Vorrichtung nach einem der Ansprüche 1 bis 41, gekennzeichnet durch einen Detektor, der mit dem Auslaßende des Kapillarrohrs verbunden ist, um den Durchgang der Probe dadurch zu erfassen.

**43.** Vorrichtung nach einem der Ansprüche 1 bis 42, gekennzeichnet durch einen T-förmigen Abschnitt (747) des Kapillarrohrs, der in dieses Kapillarrohr eingesetzt ist und mit einer Quelle von Reinigungsflüssigkeit verbunden ist, die verwendbar ist, um das Kapillarrohr zu reinigen.

**44.** Vorrichtung nach einem der Ansprüche 4, 5 und 10 bis 43, mit einem Computer (400) zur Steuerung des Betriebs der Vorrichtung, einem Bus (410), der mit dem Computer (400) verbunden ist, einer Stromversorgung (367), die Anschlüsse hat, um eine Vielzahl von Auslaßspannungen dazwischen zur Verfügung zu stellen, wobei die Stromversorgung (367) auch mit dem Bus (410) und dem Computer (400) verbunden ist, wobei sein Betrieb und das Anlegen von ausgewählten Spannungen an den Elektroden (360, 360') gesteuert und sequentiert werden kann, einer Zeitsteuerung (370), die mit dem Bus (410) und dem Computer (400) zur Steuerung der Zeitdauer des Anlegens von Betriebsspannungen an den Elektroden (360, 360') durch die Stromversorgung verbunden ist, wobei die ersten und zweiten Halterantriebseinrichtungen (260, 260') elektrisch verbunden sind mit dem Bus (410) und dem Computer (400), wobei der Betrieb davon automatisch gesteuert werden kann, ersten und zweiten Halterantriebssensoreinrichtungen (280, 280') in Betriebsstellung mit den ersten und zweiten Halterantriebseinrichtungen (260, 260') zur Steuerung von deren Bewegung, erste und zweite Tischantriebseinrichtungen (210, 210'), die elektronisch mit dem Bus (410) und dem Computer (400) verbunden sind, erste und zweite Tischantriebssensoreinrichtungen (212, 212'), die den ersten bzw. zweiten Tischantriebseinrichtungen (210, 210') zugeordnet sind, um deren Betrieb zu steuern, eine Uhrsteuereinrichtung in dem Computer, wobei der Computer betreibt:

a) das Anschalten der ersten und zweiten Halterantriebseinrichtungen (260, 260'), um die ersten und zweiten Halter (220, 220') um einen vorbestimmten Betrag anzuheben, was die ersten und zweiten Halter (220, 220') oberhalb der ersten bzw. zweiten Tischeinrichtungen (170, 170') anhebt,

b) das Anschalten der ersten und zweiten Tischantriebseinrichtungen (210, 210'), um die ersten und zweiten Tischeinrichtungen (170, 170') zu einer Startposition unter der Steuerung der ersten und zweiten Tischantriebssensoreinrichtungen (212, 212') zu drehen,

c) das Anschalten der ersten und zweiten Halterantriebseinrichtung (260, 260'), um den ersten und zweiten Halter (220, 220') um einen Betrag, der durch die erste und zweite Halterantriebssensoreinrichtungen (280, 280') vorbestimmt wurde, herabzusenken, die die Halter und die Einlaß- und Auslaßenden des Kapillarrohrs, das mit Pufferlösung gefüllt ist, in einen ersten Behälter, der eine zu analysierende Probensubstanz enthält zu plazieren,

d) Bewirken, daß eine Probenflüssigkeit in das Kapillarrohr (310) injiziert wird; und

e) Bewirken, daß die Probe entlang des Kapillarrohrs (310) fließt.

**45.** Verfahren zum Nachweis der Natur einer Probe einer Substanz durch Kapillarelektrophorese durch den Gebrauch der Vorrichtung gemäß einem der Ansprüche 1 bis 44, mit den Schritten des Hindurchleitens einer zu analysierenden Substanz in eine Richtung durch einen Detektor, um einen Impuls, der repräsentativ zu der optischen Wellenlänge der Probe ist, zu erhalten, gekennzeichnet durch das Hindurchleiten der Substanz in die umgekehrte Richtung durch den Detektor, um einen zweiten Impuls, der repräsentativ für die optische Wellenlänge der Probe ist, zu erhalten, und Fortsetzen des Durchleitungsprozesses der Substanz zurück und vorwärts durch den Detektor, um eine Serie von Impulsen zu erhalten, die zusammen eine genaue Identifikation der Probe zur Verfügung stellt.

**Revendications**

1. Appareil d'électrophorèse capillaire, comprenant un tube capillaire (310, 645, 719) du type qui peut être chargé électriquement, ledit tube capillaire ayant des première et deuxième extrémités, un détecteur (290) adjacent audit tube capillaire, des premiers moyens (170) à ladite première exxtrémité dudit tube capillaire (310, 645, 719) constituant une source de solutions tampons et une source de substance échantillon à analyser, des deuxièmes moyens (360) couplés audit appareil (10) pour appliquer un potentiel électrique audit tube capillaire (310, 645, 719), ce par quoi un échantillon circule dans ledit tube capillaire et passe par ledit détecteur, caractérisé en ce que lesdits premiers moyens comprennent des moyens formant table (170, 737) portant une pluralité de godets à échantillons (190, 735) et un support (220) pour maintenir une extrémité dudit tube capillaire (310, 645, 719) en relation fonctionnelle avec un desdits godets (190, 735), lesdits godets contenant soit une solution tampon, soit un échantillon à analyser, et des moyens pour déplacer lesdits moyens formant table (170, 737) et ledit support (220) l'un par rapport à l'autre de manière que ladite première extrémité dudit tube capillaire (310, 645, 719) puisse être déplacée pour être mise en relation fonctionnelle avec un desdits godets (190, 735) ou retirée de cette relation.

2. Appareil selon la revendication 1, caractérisé en ce que lesdits moyens formant table sont une table tournante (170) et comportent une rangée annulaire de trous (180) dans lesquels les godets à échantillons (190) sont disposés.

3. Appareil selon la revendication 1 ou 2, caractérisé en ce qu'il comprend des troisièmes moyens à ladite deuxième extrémité dudit tube capillaire (310), comprenant des deuxièmes moyens formant table (170') et une pluralité de deuxièmes godets à échantillons (190') portés par ceux-ci, un deuxième support (220') pour maintenir la deuxième extrémité dudit tube capillaire (310) en relation fonctionnelle avec un desdits deuxièmes godets à échantillon (190').

4. Appareil selon l'une des revendications 1 à 3, caractérisé par des moyens d'entraînement de support (260, 260'), respectivement, en relation fonctionnelle avec un godet (190, 190') et pour élever ledit premier ou deuxième support (220, 220'), respectivement, hors de relation fonctionnelle avec un godet.

5. Appareil selon l'une des revendications 1 à 4, caractérisé par des moyens d'entraînement de table (210, 210') pour faire tourner lesdits premiers ou deuxièmes moyens formant table (170, 170'), respectivement, par rapport audit premier ou deuxième support (220, 220'), respectivement.

6. Appareil selon l'une des revendications 1 à 5, caractérisé en ce que lesdits premiers ou deuxièmes moyens formant table (170, 170'), respectivement, peuvent être déplacés verticalement vers le haut et vers le bas par rapport audit premier ou deuxième support (220, 220'), respectivement.

7. Appareil selon la revendication 5 ou 6, carractérisé par un pilier vertical (200, 200') fixé auxdits premiers ou deuxièmes moyens formant table (170, 170'), respectivement, et s'étendant vers le bas à partir de ceux-ci, et des moyens de moteur (210, 210') couplés audit pilier vertical pour faire tourner lesdits premiers ou deuxièmes moyens formant table, respectivement, et pour entraîner lesdits premiers ou deuxièmes moyens formant table, respectivement, verticalement vers le haut ou vers le bas.

8. Appareil selon l'une des revendications 1 à 7, caractérisé en ce que ledit premier support (220) est disposé de telle manière que ladite première extrémité dudit tube capillaire (310) est toujours positionnée au-dessus d'un desdits godets (190).

9. Appareil selon l'une des revendications 1 à 8, caractérisé en ce que ledit premier ou deuxième support (220, 220'), respectivement, comporte une partie cylindrique (243) qui a une ouverture (247) qui est adaptée pour recevoir une extrémité dudit tube capillaire (310) et une partie tubulaire creuse (248) qui s'étend vers le bas à partir de ladite partie cylindrique (243), et le tube capillaire (310) est adapté pour être introduit dans ladite partie tubulaire creuse (248).

10. Appareil selon l'une des revendications 1 à 9, caractérisé par une première électrode (360) en relation fonctionnelle avec ladite première extrémité dudit tube capillaire (310) et une deuxième électrode (360') en relation fonctionnelle avec ladite deuxième extrémité dudit tube capillaire (310), et des moyens pour appliquer un potentiel électrique entre lesdites première et deuxième électrodes.

11. Appareil selon la revendication 10, caractérisé en ce que ledit potentiel électrique est appliqué avec lesdites première et deuxième extrémités dudit tube capillaire (310) plongées dans lesdites solutions tampons.

12. Appareil selon l'une des revendications 3 à 11, caractérisé en ce qu'un organe formant support en forme de boîte (20) ayant une paroi supérieure (30), des parois antérieure et postérieure (40, 50) et des parois extrêmes gauche et droite (60, 70), une première enceinte en forme de boîte (90) à une extrémité dudit organe formant support (20) et une deuxième enceinte en forme de boîte (100) à l'extrémité opposée dudit organe formant support (20) sont prévues, dans lequel lesdites enceintes en forme de boîte (90, 100) comprennent chacune un organe formant base (110, 110'), des parois latérales gauche et droite (120, 130), des parois antérieure et postérieure (140, 150), et un couvercle amovible (150), lesdits premiers moyens formant table (170) et ledit premier support (220) sont disposés à l'intérieur de ladite première enceinte en forme de boîte (90), lesdits deuxièmes moyens formant table (170') et ledit deuxième support (220) sont disposés à l'intérieur de ladite deuxième enceinte en forme de boîte (100), et ledit tube capillaire (310) s'étend de ladite première enceinte en forme de boîte (90) à ladite deuxième enceinte en forme de boîte (100) et a une extrémité disposée à l'intérieur dudit tube creux (248) et l'autre extrémité dudit tube capillaire est disposée à l'intérieur dudit deuxième tube creux (248').

13. Appareil selon la revendication 12, caractérisé en ce que lesdits premiers ou deuxièmes moyens formant table (170, 170'), respectivement, sont supportés sur un pilier vertical (200, 200') qui s'étend au-dessous de la paroi supérieure (30) dudit organe formant support (20) et comporte une partie inférieure de pilier à celle-ci, et par un moteur (210) couplé à ladite partie inférieure de pilier au-dessous de ladite paroi supérieure (30) dudit organe formant support (20), un disque de capteur horizontal (203) fixé à ladite partie inférieure de pilier et adaptée pour être entraînée en rotation par celui-ci, et un capteur optique (212) couplé audit disque horizontal (203) et adapté pour faire fonctionner ledit moteur (210) en réponse à la position dudit disque de capteur par rapport au capteur.

14. Appareil selon la revendication 13, caractérisé en ce que ledit moteur (210) est supporté sur la surface inférieure de ladite paroi supérieure (30) dudit organe formant support (20).

15. Appareil selon l'une des revendications 12 à 14, caractérisé par des moyens d'enclenchement d'alimentation (163) associés aux couvercles desdites boîtes (90, 100) pour déconnecter l'alimentation électrique lorsqu'un couvercle est enlevé.

16. Appareil selon l'une des revendications 1 à 15, caractérisé en ce que ledit support (220) comprend un tube creux (420) ayant une fente (426) dans sa paroi latérale, un pilier vertical (250) à l'intérieur dudit support et adapté pour se déplacer verticalement vers le haut et vers le bas, un bras horizontal (428) s'étendant latéralement à partir dudit pilier vertical (250) à travers ladite fente (426).

17. Appareil selon la revendication 16, caractérisé en ce que la première électrode est une électrode en film (432).

18. Appareil selon l'une des revendications 4 à 17, caractérisé par un circuit électronique pour synchroniser automatiquement le fonctionnement desdits premiers ou deuxièmes moyens d'entraînement de support (260, 260'), respectivement, et desdits premiers ou deuxièmes moyens d'entraînement de table (210, 210'), respectivement, de manière que dans une séquence d'opérations, ledit premier ou deuxième support (220, 220'), respectivement, est élevé au-dessus desdits moyens formant table (170, 170') et ensuite lesdits moyens formant table sont entraînés en rotation jusqu'à une position où un godet sélectionné (190, 190') est au-dessous dudit support, et ensuite ledit support est abaissé de manière que ladite première extrémité dudit tube capillaire (310) soit dans ledit godet.

19. Appareil selon l'une des revendications 16 à 18, caractérisé en ce que ledit pilier déplaçable verticalement a une partie inférieure de pilier s'étendant vers le bas à travers ledit organe formant base (110) de la dite boîte (90, 100) jusqu'au-dessous de ladite paroi supérieure (30) dudit organe formant support (20), un moteur (260, 260') couplé à ladite partie inférieure de pilier pour entraîner ledit pilier vers le haut et vers le bas, un capteur optique (280) disposé pour être voisin de ladite partie inférieure de pilier, et des moyens (263) portés par ladite partie inférieure de pilier et disposés pour fonctionner avec ledit capteur optique (280) pour commander le fonctionnement dudit moteur.

20. Appareil selon l'une des revendications 3 à 19, caractérisé par des moyens pour faire varier l'espacement entre lesdits premier et deuxième supports (220, 220') et la longueur de fonctionnement du tube capillaire (310) entre les deux.

21. Appareil selon la revendication 20, caractérisé en ce que la première boîte (90) est montée sur ladite paroi supérieure (30) et ladite deuxième boîte (100) est montée de manière coulissante sur ladite paroi supérieure (30) et fixée aux moyens de montage (570, 580) disposés au-dessous de ladite paroi supérieure et à l'intérieur dudit organe formant support en forme de boîte (20).

22. Appareil selon la revendication 21, caractérisé en ce que lesdits moyens de montage comprennent une première roue pouvant tourner (572) et une deuxième roue pouvant tourner (582) espacée de ladite première roue pouvant tourner, une courroie d'entraînement (580) couplée auxdites roues pouvant tourner (572, 582), un moteur d'entraînement (570) couplé à ladite première roue pouvant tourner (572), et des moyens (590) couplés à ladite courroie d'entraînement (580) et à ladite deuxième boîte (100), ce par quoi la mise en action dudit moteur d'entraînement (570) et le mouvement de ladite courroie d'entraînement amènent ladite deuxième boîte à coulisser le long de ladite paroi supérieure (30) pour assurer différents espacements par rapport à ladite première boîte (90).

23. Appareil selon la revendication 22, caractérisé par une ouverture s'étendant le long d'une partie de la longueur au niveau de ladite paroi supérieure (30) et par un écran du type soufflet (520) disposé le long de ladite ouverture dans ladite paroi supérieure pour empêcher des corps étrangers de tomber dans ledit organe formant support en forme de boîte (30).

24. Appareil selon l'une des revendications 20 à 23, caractérisé par des moyens supportant un tube capillaire entre ladite première boîte (90) et ladite deuxième boîte 100, et des moyens (630) associés audit organe formant support en forme de boîte pour faire varier l'espacement entre ladite première boîte (90) et ladite deuxième boîte (100), ce par quoi des tubes capillaires de différentes longueurs peuvent être supportés entre celles-ci.

25. Appareil selon l'une des revendications 1 à 24, caractérisé par un support de cartouche de capillaire enroulé amovible (711) contenant un tube capillaire enroulé (713) couplé audit tube capillaire (310).

26. Appareil selon la revendication 25, caractérisé en ce que ledit tube capillaire est sous la forme d'une bobine de tube de verre (713).

27. Appareil selon la revendication 26, caractérisé en ce que ladite bobine de tube de verre (713) est fixée à un organe formant support (721) en plastique, métal ou une matière analogue, notamment contenant un système de refroidissement pour commander la température du tube capillaire, comprenant une entrée (723) et une sortie (725) pour faire circuler un fluide en maintenant ainsi une large gamme de températures régulées à l'intérieur de l'organe formant support.

28. Appareil selon l'une des revendications 1 à 27, caractérisé par un verre grossissant (614) couplé audit tube capillaire (310, 619) pour observer l'écoulement de fluide dans ledit tube capillaire.

29. Appareil selon la revendication 28, caractérisé en ce que ledit verre grossissant (614) permet l'observation du ménisque de l'échantillon (P1, P2) dans ledit tube capillaire pour déterminer l'écoulement électro-osmotique dans celui-ci.

30. Appareil selon l'une des revendications 1 à 29, comprenant en outre une pompe (635) couplée à l'extrémité de sortie (615) dudit tube capillaire.

31. Appareil selon la revendication 30, caractérisé en ce que ladite pompe (635) est une pompe miniature montée à l'intérieur dudit organe formant support (20).

32. Appareil selon l'une des revendications 1 à 31, caractérisé par une source (640) de gaz absorbant l'oxygène ou d'un gaz inerte amené auxdits moyens formant table (170) pour introduction dudit gaz dans des godets à échantillons (190) pour éliminer les bulles d'air dans celui-ci.

33. Appareil selon la revendication 32, caractérisé en ce que ledit gaz est un gaz sélectionné parmi le groupe de gaz comprenant l'hélium, l'azote et l'argon.

34. Appareil selon l'une des revendications 1 à 33, caractérisé par des moyens (710) pour faire fonctionner lesdits deuxièmes moyens pour amener ledit potentiel électrique à être inversé cycliquement pour amener ledit échantillon à se déplacer d'abord dans un sens dans ledit détecteur (290) pour produire une série d'impulsions de détecteur pour identification de l'échantillon.

35. Appareil selon la revendication 34, caractérisé en ce que lesdits deuxièmes moyens (360, 360') sont réversibles pour amener ladite matière échantillon à s'écouler dans le sens inverse dudit premier sens pour amener ladite matière échantillon à passer par ledit détecteur (290) pour produire une deuxième impulsion de détecteur, et des moyens sont prévus pour actionner alternativement lesdits deuxièmes moyens pour amener ladite substance échantillon à passer dans un sens et dans l'autre dans ledit détecteur et produire par ce moyen des impulsions de détecteur multiples.

36. Appareil selon l'une des revendications 1 à 35, caractérisé en ce que ledit tube capillaire a un diamètre intérieur compris dans l'intervalle de 25 microns à environ 200 microns.

37. Appareil selon l'une des revendications 1 à 36, caractérisé en ce que ledit tube capillaire comprend une pluralité de tronçons (647, 649, 650) couplés ensemble bout à bout, les surfaces intérieures desdits tronçons étant enduites de produits chimiques différents.

38. Appareil selon la revendication 37, caractérisé en ce que les extrémités adjacentes desdits tronçons se touchent et sont fixées ensemble au moyen d'un manchon les entourant (652) qui est fixé aux surfaces extérieures desdits tronçons de tube capillaire.

39. Apareil selon l'une des revendications 1 à 38, caractérisé par un tube de verre poreux (725) recevant la première ou la deuxième extrémité dudit tube capillaire et un tube auxiliaire (727) dans ledit tube de verre poreux (725) ayant une extrémité adjacente à la première ou la deuxième extrémité dudit tube capillaire et adaptée pour recevoir un échantillon issu dudit tube capillaire, ledit tube auxiliaire (727) ayant une extrémité de sortie par laquelle l'échantillon sort pour être recueilli par des moyens collecteurs.

40. Appareil selon la revendication 39, caractérisé en ce que l'extrémité de sortie dudit tube auxiliaire (727) est positionné au-dessus desdits moyens formant table (737) pour recevoir des échantillons issus dudit tube auxiliaire (727).

41. Appareil selon la revendication 40, caractérisé par un capteur (739) à l'extrémité de sortie dudit tube auxiliaire (727), une fibre de verre optique (741) couplée à une extrémité audit capteur (739) et à l'autre extrémité à un détecteur (743) pour détecter le passage d'un échantillon dans ledit tube auxiliaire (727), ce par quoi la rotation desdits moyens formant table peut être effectuée lorsque chaque échantillon apparaît.

42. Appareil selon l'une des revendications 1 à 41, caractérisé par un détecteur couplé à l'extrémité de sortie dudit tube capillaire pour détecter le passage d'un échantillon dans celui-ci.

43. Appareil selon l'une des revendications 1 à 42, caractérisé par un tronçon en forme de T (747) de tube capillaire insérée dans ledit tube capillaire et connectée à une source de fluide de nettoyage utilisable pour nettoyer ledit tube capillaire.

44. Appareil selon l'une des revendications 4, 5 et 10 à 43, comportant un ordinateur (400) pour commander le fonctionnement de l'appareil, un bus (410) connecté audit ordinateur (400), une alimentation (367) ayant des bornes adaptées pour fournir une pluralité de tensions entre celles-ci, ladite alimentation (367) étant également connectée audit bus (410) et audit ordinateur (400), ce par quoi son fonctionnement et l'application de tensions sélectionnées auxdites électrodes (360, 360') peuvent être commandées et séquencées, une commande de cadencement (370) connectée audit bus (410) et audit ordinateur (400) pour commander la durée du temps d'application de tensions de fonctionnemnt auxdites électrodes (360, 360') par ladite alimentation, lesdits premiers et deuxièmes moyens d'entraînement de supports (260, 260') étant connectés électriquement audit bus (410) et audit ordinateur (400), ce par quoi le fonctionnement de ceux-ci peut être commandé automatiquement, des premiers et deuxièmes moyens capteurs d'entraînement de support (280, 280') en relation fonctionnelle avec lesdits premiers et deuxièmes moyens d'entraînement de support (260, 260') pour commander le mouvement de ceux-ci, lesdits premiers et deuxièmes moyens d'entraînement de table (210, 210') étant connectés électriquement audit bus (410) et audit ordinateur (400), des premiers et deuxièmes moyens capteurs d'entraînement de table (212, 212') associés auxdits premiers et deuxièmes moyens d'entraînement de table (210, 210'), respectivement, pour commander le fonctionnement de ceux-ci, des moyens de commande à horloge dans ledit ordinateur, ledit ordinateur fonctionnant pour:

   a) mettre sous tension lesdits premiers et deuxièmes moyens d'entraînement de support (260, 260') pour élever lesdits premier et deuxième supports (220, 220') d'une quantitié déterminée qui élève lesdits premiers et deuxièmes moyens formant table (170, 170'), respectivement;
   b) mettre sous tension lesdits premiers et deuxièmes moyens d'entraînement de table (210, 210') pour faire tourner lesdits premiers et deuxièmes moyens formant table (170, 170') jusqu'à une position de début sous la commande desdits premiers et deuxièmes moyens capteurs d'entraînement de table (212, 212');

c) mettre sous tension lesdits premiers et deuxièmes moyens d'entraînement de support (260, 260') pour abaisser lesdits premier et deuxième supports (220, 220') d'une quantité déterminée par lesdits premiers et deuxièmes moyens capteurs d'entraînement de support (280, 280') qui placent lesdits supports et lesdites extrémités d'entrée et de sortie dudit tube capillaire, qui est rempli d'une solution tampon, dans un premier godet contenant une substance échantillon à analyser;

d) amener un fluide échantillon à être injecté dans ledit tube capillaire (310); et

e) amener ledit échantillon à s'écouler le long dudit tube capillaire (310).

45. Procédé pour détecter la nature d'un échantillon d'une substance par électrophorèse capillaire en utilisant l'appareil selon l'une des revendications 1 à 44, comprenant les étapes consistant à faire passer une substance à analyser dans un sens dans un détecteur pour obtenir une impulsion représentative de la longeur d'onde optique dudit échantillon, caractérisé en ce que l'on fait passer la substance dans le sens opposé dans ledit détecteur pour obtenir une impulsion représentative de la longueur d'onde optique dudit échantillon, et à continuer le processus consistant à faire passer la substance dans un sens et dans l'autre dans ledit détecteur pour obtenir une série d'impulsions qui se combinent pour fournir une identification précise de l'échantillon.

FIG. 1

EP 0 397 699 B1

FIG. 2

FIG. 3

FIG. 4

FIG. 5

FIG. 6

F I G. 8

F 1 G. 9

FIG. 10

EP 0 397 699 B1

MICROPROCESSOR

FIG. 13

370

374

372

380

376

378

FIG. 7

311

FIG. 12

308

FIG. 11

31

FIG. 14A

EP 0 397 699 B1

FIG. 14B

FIG. 15

FIG.16

FIG.17

F I G. 18

FIG. 19

F I G. 20

F I G. 21

FIG. 22

645

652          652

647     649     650

# FIG. 23

725

719     727

723'     729

723

# FIG. 24

F I G. 25

F I G. 26

727

745

739

743

741

729

735

745

737

F I G. 27

290

310

630

630

630

FIG. 29

FIG. 28

**F I G. 30**